# EUROPÄISCHE PATENTSCHRIFT

(11) **EP 3 911 590 B1**
(45) Veröffentlichungstag und Bekanntmachung des Hinweises auf die Patenterteilung: **12.03.2025**
(21) Anmeldenummer: 20704382.9
(22) Anmeldetag: 03.01.2020
(51) Int. Cl.: B65H 23/025, D06C 3/06, B29C 55/08, F16C 13/00, F16C 13/02

(54) **SPREIZEINRICHTUNG, BREITSTRECKWALZE SOWIE VERFAHREN ZUM SPREIZEN EINER FLÄCHIGEN MATERIALBAHN**
SPREADING DEVICE, SPREADING ROLLER, AND METHOD FOR SPREADING A FLAT MATERIAL WEB
DISPOSITIF D'ÉCARTEMENT, ROULEAU ÉLARGISSEUR, AINSI QUE PROCÉDÉ POUR L'ÉCARTEMENT D'UNE BANDE DE MATÉRIAU PLANE

(30) Priorität: 05.01.2019 DE 102019000081
(43) Veröffentlichungstag der Anmeldung: 24.11.2021
(73) Patentinhaber: Hessenbruch, Rolf, 42855 Remscheid (DE)
(72) Erfinder: Hessenbruch, Rolf, 42855 Remscheid (DE)
(86) Internationale Anmeldenummer: PCT/DE2020/000001
(87) Internationale Veröffentlichungsnummer: WO 2020/141006

(56) Entgegenhaltungen:
- WO-A1-2017/194039
- DE-U1- 202011 100 765
- DE-U1- 202017 001 904
- US-A- 2 042 010

## Beschreibung

Die Erfindung betrifft eine Spreizeinrichtung zum Spreizen einer flächigen Materialbahn mit einer Spreizhauptrichtung, mit einem elastisch verformbaren Trägerteil zum Anordnen an einem Rotationskörper und mit einer Vielzahl an elastisch verformbaren Einzelspreizelementen zum Erzielen einer in Spreizhauptrichtung gerichteten Spreizwirkung, bei welcher das jeweilige Einzelspreizelement einerseits an seinem dem Trägerteil abgewandten freien Ende einen Kontaktflächenbereich mit einer Kontaktfläche zum Wechselwirken mit der flächigen Materialbahn aufweist und andererseits an seinem dem freien Ende abgewandten, zweiten Ende an dem Trägerteil angeordnet ist.

Die Erfindung betrifft des Weiteren eine Breitstreckwalze zum seitlichen Ausbreiten einer flächigen Materialbahn in axiale Spreizrichtungen mit einer Umfangsfläche, mittels welcher die Breitstreckwalze mit der flächigen Materialbahn in Wirkkontakt bringbar ist, mit einer Rotationsachse, um welche die Breitstreckwalze rotierbar ist, und mit Spreizeinrichtungen umfassend eine Vielzahl an Einzelspreizelementen, welche die Umfangsfläche bilden.

Die Erfindung betrifft außerdem ein Verfahren zum Spreizen einer flächigen Materialbahn mit Spreizeinrichtungen, insbesondere einer Breitstreckwalze, bei welchem eine Vielzahl an elastisch verformbaren Einzelspreizelementen der Spreizeinrichtung mit der flächigen Materialbahn in Wirkkontakt gebracht wird, bei welchem die Spreizeinrichtung während des Spreizens der flächigen Materialbahn um eine Rotationsachse rotiert, und bei welchem die Kontaktfläche des jeweiligen Einzelspreizelements durch Fliehkräfte nach radial außen ausgelenkt wird.

Es ist bekannt, eine +"laufende" Warenbahn bzw. Materialbahn, zum Beispiel eine Papierbahn, eine Gewebebahn, eine Folienbahn usw., welche entlang einer Förderstrecke in "Laufrichtung" bzw. Maschinenrichtung mit einer Produktionsgeschwindigkeit bewegt wird, dadurch faltenfrei flachzulegen bzw. zu spreizen, dass senkrecht zu der Laufrichtung der Warenbahn bzw. Materialbahn Spreizkräfte auf diese Warenbahn bzw. Materialbahn ausgeübt werden. Hierzu sind für derartige Materialbahnen, wie etwa Folien aus thermoplastischem Material, Papier, Vliese und andere Flachbahnen, sogenannte Breitstreckwalzen bekannt.

Eine bekannte für thermoplastische Folien anwendbare Lösung ist die leicht gekrümmte Gummiwalze, die sogenannte Bananenwalze. Diese Bananenwalzen sind jedoch etwas schwergängig, da der umgebende Gummimantel ständig verformt wird.

Eine andere Form der Breitstreckwalze ist der Schnurbreithalter, bei dem die Folie mit Rundschnüren in Kontakt kommt, die während der Berührung durch einen Mechanismus nach außen gedehnt werden und dadurch eine Spreizkraft erzeugen. Diese Walzen sind jedoch teuer, hinterlassen unter Umständen meist unerwünschte Markierungen auf der Folie und benötigen einen zusätzlichen Antrieb.

Noch andere Breitstreckwalzen bestehen aus vielen Einzelelementen, die während der Kontaktzeit mit der Folie mechanisch nach außen gezogen werden und dadurch Spreizkräfte erzeugen und entsprechende Spreizwirkungen an der Folie erzielen. Diese Breitstreckwalzen sind jedoch nur für sehr geringe Geschwindigkeiten geeignet.

Andere Breitstreckwalzen bestehen aus nach außen schräg geneigten Faserbündeln, die bei Berührung mit der Warenbahn eine leichte Neigung zum Walzenrand ausführen, wodurch die Spreizung entsteht.

Noch andere Breitstreckwalzen (DE 10 2011 107 188 A1) besitzen Spreizeinrichtungen aus Gummiringen, die mit vielen Einzelspreizelementen bestückt sind und ebenfalls bei Berührung mit der Warenbahn eine Bewegung nach außen ausüben und dadurch den Spreizvorgang bewerkstelligen.

Beispielsweise beschreibt die DE 20 2017 001 904 U1 eine Spreizwalze zum seitlichen Ausbreiten einer flächigen Materialbahn in axiale Spreizrichtungen. Die Spreizwalze trägt hierzu eine Vielzahl an elastisch verformbaren Einzelspreizelementen mit einem Kontaktteil zum Ausgestalten einer Kontaktfläche, mit einem Sockel zum Anordnen an der Spreizwalze und mit einem Stegteil zum Verbinden von Kontaktteil und Sockel. Das Stegteil weist sockelseitig durch eine Sollbiegestelle eine geringere Steifigkeit auf.

Ferner zeigt die US 2 042 010 A einen Gewebespreizer mit flexiblen Spreizarmen zum Spreizen einer Gewebebahn. Wirken Fliehkräfte auf diese flexiblen Spreizarme, etwa bei Rotation des Gewebespreizers, "wandern" diese Spreizarme nach radial außen.

Ferner betrifft die DE 20 2011 100 765 U1 eine andere zylindrische Spreizwalze aus einer frei drehbaren Gummiwalze mit Metallkern. In der Gummiwalze sind derart Radial- und Axialspalte eingearbeitet, so dass hierdurch eine Vielzahl an flexiblen Einzelspreizelementen an der Spreizwalze ausgebildet sind.

Die vorstehend beschriebenen Breitstreckwalzen sind üblicherweise für Produktionsgeschwindigkeiten von max. 200 bis 300 m/min geeignet. Bei größeren Produktionsgeschwindigkeiten und damit auch einhergehenden höheren Rotationsgeschwindigkeiten der Walzen treten aufgrund von an den Spreizelementen entsprechend wirkenden Fliehkräfte Verformungen an den Spreizelementen nach außen auf, die eine saubere Spreizung dadurch erschweren, dass die Kontaktflächen oftmals nicht mehr im Wesentlichen parallel zu der Warenbahn bzw. Materialbahn verlaufen, sondern dann nachteilig unter einem größeren Winkel gegenüber der Warenbahn bzw. Materialbahn stehen, wodurch empfindliche Störungen beim Breitstrecken der Warenbahn bzw. Materialbahn entstehen können.

Der Erfindung liegt die allgemeine Aufgabe zugrunde, gattungsgemäße Breitstreckwalzen sowie hierfür vorgesehene Spreizeinrichtungen weiterzuentwickeln und diesbezügliche bekannte Nachteile überwinden zu lassen. Insbesondere liegt der Erfindung die Aufgabe zugrunde, Spreizeinrichtungen und Breitstreckwalzen bereitzustellen, welche auch für höhere Produktionsgeschwindigkeiten betriebssicher und gut geeignet sind.

Diese Aufgaben werden nach einem ersten Aspekt der Erfindung von einer Spreizeinrichtung zum Spreizen einer flächigen Materialbahn mit einer Spreizhauptrichtung, mit einem elastisch verformbaren Trägerteil zum Anordnen an einem Rotationskörper und mit einer Vielzahl an elastisch verformbaren Einzelspreizelementen zum Erzielen einer in Spreizhauptrichtung gerichteten Spreizwirkung gelöst, bei welcher das jeweilige Einzelspreizelement einerseits an seinem dem Trägerteil abgewandten freien Ende einen Kontaktflächenbereich mit einer Kontaktfläche zum Wechselwirken mit der flächigen Materialbahn aufweist und andererseits an seinem dem freien Ende abgewandten, zweiten Ende an dem Trägerteil angeordnet ist, wobei die Spreizeinrichtung derart eingerichtet ist, dass das jeweilige Einzelspreizelement mittels Fliehkräfteeinwirkung zumindest bereichsweise oder zur Gänze in Richtung des freien Endes um eine Kippachse kippbar ist, wobei das jeweilige Einzelspreizelement wenigstens zwei Verformungsbereiche mit unterschiedlichen Hauptverformungsrichtungen und/oder mit unterschiedlichen Verformungsvermögen aufweist, wobei die wenigstens zwei Verformungsbereiche auf unterschiedlichen Radialhöhen angeordnet sind.

Vorteilhafterweise können hierdurch signifikant höhere Produktionsgeschwindigkeiten erzielt werden

Dadurch, dass das Einzelspreizelement in Richtung des freien Endes des Einzelspreizelements kippbar ist, bezogen auf das Trägerteil des Einzelspreizelements, sobald aufgrund einer ausreichenden Rotationsgeschwindigkeit der Spreizeinrichtung hinreichend hohe Fliehkräfte auf dieses Einzelspreizelement einwirken, kann eine bloße nur in Wirkrichtung der Fliehkräfte wirkende elastische Gesamtverformung des jeweiligen Einzelspreizelements vermieden bzw. zumindest signifikant verringert werden.

Darüber hinaus ist es vorteilhaft, dass das jeweilige Einzelspreizelement wenigstens zwei Verformungsbereiche mit unterschiedlichen Hauptverformungsrichtungen aufweist, wobei die wenigstens zwei Verformungsbereiche auf unterschiedlichen Radialhöhen angeordnet sind.

Hierdurch werden unterschiedliche Verformungseffekte erzielt.

Ähnlich vorteilhaft ist es, dass das jeweilige Einzelspreizelement wenigstens zwei Verformungsbereiche mit unterschiedlichen Verformungsvermögen aufweist, wobei die wenigstens zwei Verformungsbereiche auf unterschiedlichen Radialhöhen angeordnet sind.

Die Rotationsgeschwindigkeit ist hierbei abhängig von der Drehzahl der Spreizeinrichtung bzw. einer Breitstreckwalze.

Vielmehr verformt sich das Einzelspreizelement vorliegend darüber hinaus zusätzlich derart, dass es auch in Richtung des freien Endes gekippt bzw. verformt wird, wodurch eine Weglängung des Einzelspreizelements in Wirkrichtung der Fliehkräfte zumindest verringert ist.

Insofern ist mittels der Erfindung ist eine Konstruktion bereitgestellt, mittels welcher eine durch auf die Spreizeinrichtung einwirkenden Fliehkräfte bedingte Höhenvergrößerung der Einzelspreizelemente in Wirkrichtung der Fliehkräfte begrenzbar ist.

Dass bedeutet im Sinne der Erfindung, dass es unter Zuhilfenahme von Fliehkräften gelingt, Kontaktflächen von Einzelspreizelementen der Spreizeinrichtung zumindest teilweise nicht nur ausschließlich in eine radial nach außen gerichtete Radialrichtung zu verlagern, sondern zusätzlich zumindest teilweise in eine oder mehrere hiervon abweichenden Verlagerungsrichtungen, nämlich in eine Axialrichtung und/oder in eine radial nach innen gerichtete Radialrichtung, wobei die genannten Verlagerungsrichtungen auf eine Rotationsache bezogen sind, um welche die Einzelspreizelemente bzw. die Spreizeinrichtung rotieren.

Insgesamt kann hierbei die Gefahr von unerwünschten Durchmesservergrößerungen einer selbst mit höheren Rotationsgeschwindigkeiten rotierenden Breitstreckwalze bzw. Spreizeinrichtung vermieden bzw. zumindest signifikant reduziert werden.

Hierdurch wiederum können betriebssicher Produktionsgeschwindigkeiten (Bahngeschwindigkeiten bzw. Fördergeschwindigkeiten) bezüglich flächiger Materialbahnen von mehr als 500 m/min oder 700 m/min oder bevorzugt von bis zu 1000 m/min erzielt werden.

Hinreichend hohe Fliehkräfte wirken insbesondere auf die Spreizeinrichtungen bzw. auf deren Einzelspreizelemente ein, wenn diese mit einer entsprechenden Rotationsgeschwindigkeit um ihre Rotationsachse (Axialrichtung) bzw. um die Rotationsachse (Axialrichtung) eines Rotationskörpers, an welchem sie angeordnet sind, einer Breitstreckwalze rotieren.

Vorliegend ist somit hinsichtlich eines Einzelspreizelements ein berührungslos arbeitender Längungsbegrenzer, bzw. hinsichtlich einer ringförmigen Spreizeinrichtung bzw. hinsichtlich einer Breitstreckwalze ein berührungslos arbeitender Durchmesserbegrenzer geschaffen.

Eine Möglichkeit, die Kontaktflächenverformung bzw. -verlagerung zu begrenzen, besteht im bisherigen Stand der Technik lediglich darin, dass die Kontaktflächen einen Anschlag berühren, der die Durchmesservergrößerung durch die Fliehkraft begrenzt. Nachteilig ist aber dabei, dass eine Spreizung an einer flächigen Materialbahn erst dann stattfinden kann, wenn Spreizelemente eine Spreizbewegung ausführen können. Und dies ist erst der Fall, wenn der Druck der flächigen Materialbahn auf die Spreizelemente größer ist als die Fliehkraft auf die Spreizelemente. Denn nur dann findet eine Spreizung aufgrund der freien Bewegungsmöglichkeit der Spreizelemente statt. Dabei ist es wichtig, dass es keine einschränkenden Bedingungen wie ausreichend große Bahnspannung oder Überwindung eines Anschlages gibt, sondern die Breitstreckfunktion soll unter allen Bedingungen wirken.

Bei der vorliegenden Erfindung ist im Gegensatz zum Stand der Technik eine freie Bewegungsmöglichkeit der Einzelspreizelemente auch bei hohen Geschwindigkeiten ermöglicht, wodurch auch schon bei leichter Berührung durch die flächige Materialbahn eine Bewegung der Spreizelemente in Spreizrichtung möglich ist.

Das heißt, eine Durchmesserbegrenzung erfolgt bei vorliegender Erfindung aufgrund einwirkender Fliehkräfte berührungslos.

Bei einer Breitstreckwalze nun, die beispielsweise aus Gummiringen besteht, die mit einer Vielzahl von radialen Vorsprüngen versehen sind, den sogenannten Einzelspreizelementen, wurde für die Formgebung der Einzelspreizelemente eine Form gefunden, bei der die Wirkung der Fliehkräfte, einen größeren Durchmesser der Gummiringe zu erzeugen, unterbleibt bzw. reduziert wird.

Jedenfalls gelingt mittels der vorliegenden Spreizeinrichtung eine vorteilhafte Weiterentwicklung insbesondere von Spreizwalzen, welche in der Praxis oft auch als Breitstreckwalzen bezeichnet sind, zum seitlichen Ausbreiten einer flächigen Materialbahn in axiale Spreizrichtungen bzw. Spreizhauptrichtungen mit einer Umfangsfläche, mittels welcher die Spreizwalze mit der flächigen Materialbahn in Wirkkontakt gebracht wird, und mit einer Rotationsachse, um welche die Spreizwalze sich mit einer Vielzahl an Spreizeinrichtungen, wie etwa Spreizelementringen, dreht.

Der Begriff "Spreizeinrichtung" beschreibt im Sinne der Erfindung jegliche Einrichtungen, welche zumindest teilweise, bevorzugt größtenteils, elastisch verformbar ausgestaltet sind.

Die Spreizeinrichtung weist ein Trägerteil (Fußteil) auf, mittels welchem die Spreizeinrichtung an einem Rotationskörper einer Breitstreckwalze angebracht werden kann. Ferner trägt das Trägerteil die Vielzahl an Einzelspreizelementen der Spreizeinrichtung. Das Trägerteil kann vielfältig geformt sein. Bevorzugt ist das Trägerteil ringförmig, insbesondere als geschlossenes elastisches Ringteil, ausgebildet. Das Trägerteil kann alternativ aber auch bandförmig, etwa als elastisches Endlosbandteil ausgebildet sein.

Die Spreizeinrichtung mit seinem Trägerteil und seinen Einzelspreizelementen ist überwiegend, vorzugsweise vollständig, aus einem Elastomer oder einem thermoplastischen Elastomer hergestellt, beispielsweise als Spritzgießteil.

Die Spreizeinrichtung weist neben dem Trägerteil noch mehrere Einzelspreizelementen auf, welche untereinander berührungsfrei und nebeneinander an dem Trägerteil angeordnet sind. Mittels der Einzelspreizelemente tritt die Spreizeinrichtung mit einer flächigen Materialbahn in Wirkkontakt, wenn die flächige Materialbahn über die Spreizeinrichtung oder eine hiermit bestückte Breitstreckwalze geführt wird bzw. die Spreizeinrichtung bzw. die Breitstreckwalze an der flächigen Materialbahn abrollt.

Ferner weist die Spreizeinrichtung eine Spreizhauptrichtung auf, in welche die flächige Materialbahn bei Berührung gespreizt wird. Mit anderen Worten bedeutet dies, dass mittels der Spreizeinrichtung bzw. deren Einzelspreizelemente eine Spreizwirkung in Axialrichtung auf die flächige Materialbahn ausgeübt werden kann. Diese Spreizhauptrichtung zeigt in Richtung der Längserstreckung des - bezogen auf das Trägerteil - radial weiter außen liegenden Kontaktflächenbereichs des Einzelspreizelements. Das heißt mit anderen Worten, dass die Spreizhauptrichtung in die Richtung gerichtet ist, in welche das freie Ende des Einzelspreizelements bzw. des Kontaktflächenbereichs zeigt. Der Vollständigkeit halber sei hier auch noch erwähnt, dass die Spreizhauptrichtung in Richtung der Rotationsachse (Axialrichtung) zeigt, um welche die Spreizeinrichtung bei ordnungsgemäßer Montage mit der Breitstreckwalze rotiert.

Neben dem Kontaktflächenbereich zeichnet sich das Einzelspreizelement auch noch durch einen Verbindungsbereich auch, mittels welchem der Kontaktflächenbereich elastisch mit dem Trägerteil verbunden ist. Wie später noch detaillierter erläutert ist, liegt der Verbindungsbereich bezogen auf das Trägerteil zumindest größtenteils radial weiter innen als der Kontaktflächenbereich. Genauer gesagt ist der Verbindungsbereich zwischen dem Kontaktflächenbereich und dem Trägerteil angeordnet.

Der Verbindungsbereich umfasst sogleich auch noch einen Biegebereich, welcher derart gestaltet ist, dass das Einzelspreizelement bzw. insbesondere auch der Kontaktflächenbereich mittels auf die Spreizeinrichtung wirkenden Fliehkräften in Richtung des freien Endes kippbar ist.

Insbesondere umfasst der Verbindungsbereich und damit auch der Biegebereich die Kippachse des Einzelspreizelements. Die Kippachse verläuft hierbei quer zu der vorliegenden Spreizhauptrichtung.

Dadurch umfasst die Spreizeinrichtung und insbesondere jedes der Einzelspreizelemente eine Kippeinrichtung, welche automatisch durch Rotation bzw. Fliehkräfte betätigbar ist, um insbesondere einen Längungseffekt des Einzelspreizelements in die radial nach außen zeigende Wirkrichtung zu mindern.

Ferner sieht eine nicht erfindungsgemäße Spreizeinrichtung zum Spreizen einer flächigen Materialbahn mit einer Spreizhauptrichtung, mit einem elastisch verformbaren Trägerteil zum Anordnen an einem Rotationskörper und mit einer Vielzahl an elastisch verformbaren Einzelspreizelementen zum Erzielen einer in Spreizhauptrichtung gerichteten Spreizwirkung vor, dass das jeweilige Einzelspreizelement einerseits an seinem dem Trägerteil abgewandten freien Ende einen Kontaktflächenbereich mit einer Kontaktfläche zum Wechselwirken mit der flächigen Materialbahn aufweist und andererseits an seinem dem freien Ende abgewandten, zweiten Ende an dem Trägerteil angeordnet ist, wobei die Spreizeinrichtung derart eingerichtet ist, dass das jeweilige Einzelspreizelement mittels Fliehkräfteeinwirkung zumindest bereichsweise oder zur Gänze in Richtung des freien Endes um eine Kippachse kippbar ist, wobei das jeweilige Einzelspreizelement einen Verbindungsbereich aufweist, welcher zwischen dem Kontaktflächenbereich und dem Trägerteil angeordnet ist, wobei der Verbindungsbereich ein höheres Gewicht aufweist als der Kontaktflächenbereich, und/oder der Verbindungsbereich eine größere Dicke aufweist als der Kontaktflächenbereich, und/oder dass der Verbindungsbereich eine größere Krümmung aufweist als der Kontaktflächenbereich , und/oder dass der Verbindungsbereich einen Einzelschwerpunkt aufweist, welcher näher an einer von der Kippachse aufgespannten Vertikalebene angeordnet ist, als ein Einzelschwerpunkt des Kontaktflächenbereichs.

Vorteilhafterweise können hierdurch signifikant höhere Produktionsgeschwindigkeiten erzielt werden.

Die vorliegend beschrieben allgemeinen Kippeffekte des jeweiligen Einzelspreizelements und auch die Reduzierungseffekte der Auslenkung insbesondere der diesbezüglichen Kontaktfläche können besonders zuverlässig an der Spreizeinrichtung eingestellt werden, wenn der Verbindungsbereich eine größere Masse aufweist als der Kontaktflächenbereich. Insbesondere kann eine seitenbezogene Massenverteilung drehzahlabhängig gewählt werden.

Es ist besonders zweckmäßig, dass der Verbindungsbereich ein höheres Gewicht aufweist als der Kontaktflächenbereich. Hierdurch können insbesondere die vorstehend genannten Effekte erzielt bzw. manipuliert werden. Insofern kann auch eine gewünschte Massenverteilung an dem jeweiligen Einzelspreizelement realisiert werden, insbesondere in Abhängigkeit von einer zu erzielenden Drehzahl.

Kumulativ oder alternativ ist es vorteilhaft, dass der Verbindungsbereich eine größere Dicke aufweist als der Kontaktflächenbereich. Hierdurch kann insbesondere Einfluss auf das Verformungsvermögen des jeweiligen Einzelspreizelements genommen werden, insbesondere in Abhängigkeit von einer gewünschten Drehzahl.

Des Weiteren ist es vorteilhaft, dass der Verbindungsbereich eine größere Krümmung aufweist als der Kontaktflächenbereich. Hierdurch lässt sich der Gesamtschwerpunkt des jeweiligen Einzelspreizelements konstruktiv sehr einfach auf die der Kontaktfläche abgewandten Vertikalebenenseite anordnen.

Insgesamt ist es besonders vorteilhaft, wenn das jeweilige Einzelspreizelement einen sichelförmigen Verformungskörper aufweist. Vorteilhafterweise ist der Kontaktflächenbereich eines entsprechenden sichelförmigen Verformungskörpers weniger stark gekrümmt als der Verbindungsbereich dieses sichelförmigen Verformungskörpers.

Erforderlichenfalls kann auch der sicherförmige Verformungskörper noch weitere Funktionsbereiche aufweisen, wie beispielsweise einen Biegebereich.

Es versteht sich, dass der Kontaktflächenbereich und der Verbindungsbereich mit unterschiedlichen Einzelschwerpunkten ausgebildet sein können.

Eine weitere besonders bevorzugte Ausführungsvariante sieht vor, dass der Verbindungsbereich einen Einzelschwerpunkt aufweist, welcher näher an einer von der Kippachse aufgespannten Vertikalebene angeordnet ist, als ein Einzelschwerpunkt des Kontaktflächenbereichs. Hierdurch kann das jeweilige Einzelspreizelement kompakter gebaut werden.

Außerdem sieht eine nicht erfindungsgemäße Spreizeinrichtung zum Spreizen einer flächigen Materialbahn mit einer Spreizhauptrichtung, mit einem elastisch verformbaren Trägerteil zum Anordnen an einem Rotationskörper und mit einer Vielzahl an elastisch verformbaren Einzelspreizelementen zum Erzielen einer in Spreizhauptrichtung gerichteten Spreizwirkung vor, dass das jeweilige Einzelspreizelement einerseits an seinem dem Trägerteil abgewandten freien Ende einen Kontaktflächenbereich mit einer Kontaktfläche zum Wechselwirken mit der flächigen Materialbahn aufweist und andererseits an seinem dem freien Ende abgewandten, zweiten Ende an dem Trägerteil angeordnet ist, wobei die Gestalt des jeweiligen Einzelspreizelements derart gewählt ist, dass eine radiale Auslenkung der Kontaktfläche in nach radial außen gerichtete Radialrichtung durch auf das jeweilige Einzelspreizelement wirkende Fliehkräfte berührungslos reduzierbar ist.

Vorteilhafterweise können hierdurch signifikant höhere Produktionsgeschwindigkeiten erzielt werden.

Im Zuge der Erfindung wurde erkannt, dass bei geeigneter Wahl der Gestalt des Einzelspreizelements die Eigenrotation der Spreizeinrichtung dazu genutzt werden kann, eine kritische radiale Auslenkung insbesondere der Kontaktfläche des Einzelspreizelements nach radial weiter außen zu vermeiden; und zwar berührungslos. Vorteilhafterweise ist es bereits allein durch die konstruktive Gestalt des Einzelspreizelements möglich, das radiale Auslenkungsvermögen dieses Einzelspreizelements einzuschränken bzw. zu beeinflussen; und zwar insbesondere in Abhängigkeit von einer Rotationsgeschwindigkeit, mit welcher die Spreizeinrichtung rotiert.

Beispielsweise gelingt dies durch das Vorsehen einer entsprechenden Kippachse, welche bevorzugt an dem Verbindungsbereich des Einzelspreizelements vorgesehen ist.

Eine solche Kippachse kann zum Beispiel durch entsprechende Materialausnehmungen und/oder Materialanhäufungen oder ähnlichem formuliert sein, die wiederum in einem Biegebereich innerhalb des Verbindungsbereichs angeordnet sind.

Vorzugsweise liegt hierbei der Kontaktflächenbereich auf einer ersten Seite der Kippachse und der restliche, größere Bereich des Einzelspreizelements, insbesondere der Verbindungsbereich, auf einer anderen Seite der Kippachse.

Der Begriff "berührungslos" beschreibt im Sinne der Erfindung, dass ein Einzelspreizelement gegenüber gleichen oder anderen Komponenten bzw. Bereichen insbesondere der Spreizeinrichtung stets frei beweglich ist und auch für eine Auslenkungsbeschränkung oder -reduzierung frei beweglich bleibt, also unter Umgehung eines körperlichen Kontakts mit gleichen oder anderen Bauteilen der Spreizeinrichtung, bezogen auf einen Normalbetrieb der Spreizeinrichtung.

Darüber hinaus sieht eine ebenfalls nicht erfindungsgemäße Spreizeinrichtung zum Spreizen einer flächigen Materialbahn mit einer Spreizhauptrichtung, mit einem elastisch verformbaren Trägerteil zum Anordnen an einem Rotationskörper und mit einer Vielzahl an elastisch verformbaren Einzelspreizelementen zum Erzielen einer in Spreizhauptrichtung gerichteten Spreizwirkung vor, dass das jeweilige Einzelspreizelement einerseits an seinem dem Trägerteil abgewandten freien Ende einen Kontaktflächenbereich mit einer Kontaktfläche zum Wechselwirken mit der flächigen Materialbahn aufweist und andererseits an seinem dem freien Ende abgewandten, zweiten Ende an dem Trägerteil angeordnet ist, wobei das Verformungsvermögen des jeweiligen Einzelspreizelements derart gewählt ist, dass eine radiale Auslenkung der Kontaktfläche in nach radial außen gerichtete Radialrichtung durch auf das jeweilige Einzelspreizelement wirkenden Fliehkräfte berührungslos reduzierbar ist.

Vorteilhafterweise können hierdurch signifikant höhere Produktionsgeschwindigkeiten erzielt werden.

Kumulativ oder alternativ ist es durch die Wahl des Verformungsvermögens insbesondere des Verbindungsbereichs des Einzelspreizelements möglich, eine kritische radiale Auslenkung insbesondere der Kontaktfläche des Einzelspreizelements nach radial weiter außen zu vermeiden.

Beispielsweise gelingt dies dadurch, dass ein weniger steifer Kontaktflächenbereich auf einer ersten Seite der Kippachse und ein restlicher, steiferer Bereich des Einzelspreizelements, insbesondere steiferer Verbindungsbereich, auf einer anderen Seite der Kippachse liegt.

Darüber hinaus sieht eine nicht erfindungsgemäße Spreizeinrichtung zum Spreizen einer flächigen Materialbahn mit einer Spreizhauptrichtung, mit einem elastisch verformbaren Trägerteil zum Anordnen an einem Rotationskörper und mit einer Vielzahl an elastisch verformbaren Einzelspreizelementen zum Erzielen einer in Spreizhauptrichtung gerichteten Spreizwirkung vor, dass das jeweilige Einzelspreizelement einerseits an seinem dem Trägerteil abgewandten freien Ende einen Kontaktflächenbereich mit einer Kontaktfläche zum Wechselwirken mit der flächigen Materialbahn aufweist und andererseits an seinem dem freien Ende abgewandten, zweiten Ende an dem Trägerteil angeordnet ist, wobei die Massenverteilung des jeweiligen Einzelspreizelements derart gewählt ist, dass eine radiale Auslenkung der Kontaktfläche in nach radial außen gerichtete Radialrichtung durch auf das jeweilige Einzelspreizelement wirkenden Fliehkräfte berührungslos reduzierbar ist.

Vorteilhafterweise können hierdurch signifikant höhere Produktionsgeschwindigkeiten erzielt werden.

Kumulativ oder alternativ ist es durch die Wahl der Massenverteilung insbesondere des Verbindungsbereichs des Einzelspreizelements möglich, eine kritische radiale Auslenkung insbesondere der Kontaktfläche des Einzelspreizelements nach radial weiter außen zu vermeiden.

Beispielsweise gelingt dies dadurch, dass ein leichterer Kontaktflächenbereich auf einer ersten Seite der Kippachse und ein restlicher, schwererer Bereich des Einzelspreizelements, insbesondere ein schwererer Verbindungsbereich, auf einer anderen Seite der Kippachse liegt.

Eine bevorzugte Ausführungsvariante sieht vor, dass die Kontaktfläche durch auf das jeweilige Einzelspreizelement wirkende Fliehkräfte nach radial weiter innen verlagerbar ist. Es ist besonders vorteilhaft, wenn das jeweilige Einzelspreizelement derart ausgebildet ist, dass bei einer entsprechend gewählten Rotationsgeschwindigkeit die Kontaktfläche bzw. der Kontaktflächenbereich nach radial weiter innen verlagert und nicht nach weiter außen. Hierdurch kann sichergestellt werden, dass sich der Umfang der Spreizeinrichtung nicht kritisch erhöht, sollte die Rotationsgeschwindigkeit sich einen vorgesehenen Wert kritisch nähern oder einen solchen erreichen bzw. überschreiten.

Der Grad der Verlagerung des Kontaktflächenbereichs des Einzelspreizelements in nach radial weiter innen gerichtete Radialrichtung kann hierbei in Abhängigkeit von der Rotationsgeschwindigkeit vorteilhaft bestimmt werden.

Zweckmäßig ist es, wenn der Kontaktflächenbereich des jeweiligen Einzelspreizelements mittels Fliehkräfteeinwirkung und/oder mittels Rotation um eine Rotationsachse der Spreizeinrichtung in Radialauslenkrichtung nach radial außen auslenkbar ist, wobei die Radialauslenkrichtung des Kontaktflächenbereichs von einer Kipprichtung des Einzelspreizelements verschieden ist. Hierdurch kann besonders zuverlässig sichergestellt werden, dass einerseits die Kontaktfläche in Richtung flächiger Materialbahn bewegt wird, damit ein ausreichender Wirkkontakt zwischen Spreizeinrichtung und flächiger Materialbahn erzielt wird. Andererseits kann aber eine zu starke allgemeine Aufweitung der Spreizeinrichtung vermieden werden.

Besonders zweckmäßig ist es, wenn die Spreizeinrichtung eine Rotationsachse aufweist, um welche die Spreizeinrichtung rotierbar ist, wobei das jeweilige Einzelspreizelement bei Rotation um die Rotationsachse zumindest bereichsweise oder zur Gänze in Axialrichtung der Rotationsachse um eine Kippachse kippbar ist. Hierdurch kann das jeweilige Einzelspreizelement drehzahlabhängig an dem Trägerteil gekippt werden.

Insofern sieht eine vorteilhafte Ausführungsvariante auch vor, dass das jeweilige Einzelspreizelement mittels einer Rotationsgeschwindigkeit der Spreizeinrichtung zumindest bereichsweise oder zur Gänze in Spreizhauptrichtung um eine Kippachse kippbar ist.

Weist das jeweilige Einzelspreizelement einen Gesamtschwerpunkt auf, welcher außerhalb des Kontaktflächenbereichs liegt, kann sichergestellt werden, dass sich die Kontaktfläche bei zunehmender Rotationsgeschwindigkeit der Spreizeinrichtung nach radial weiter innen auf das Trägerteil zu bewegt.

Vorzugsweise liegt der Gesamtschwerpunkt des Einzelspreizelements bezogen auf die Kippachse auf einer der Kontaktfläche abgewandten Seite des Einzelspreizelements.

Wie vorstehend bereits erläutert, ist es von Vorteil, wenn das jeweilige Einzelspreizelement einen Verbindungsbereich aufweist, welcher zwischen dem Kontaktflächenbereich und dem Trägerteil angeordnet ist. Hierbei gestalten bevorzugt allein der Kontaktflächenbereich und der Verbindungsbereich insgesamt ein Einzelspreizelement aus.

Ist das jeweilige Einzelspreizelement mittels des Verbindungsbereichs in Axialrichtung der Spreizeinrichtung beweglich an dem Trägerteil angeordnet ist, während das Kontaktflächenbereich in Radialrichtung beweglich an dem Verbindungsbereich angeordnet ist, können bei entsprechenden Rotationsgeschwindigkeiten der Kontaktflächenbereich und der Verbindungsbereich in unterschiedliche Verlagerungsrichtungen verlagert werden, insbesondere drehzahlabhängig, wie an anderer Stelle bereits erläutert.

Die Konstruktion der Spreizeinrichtung kann sehr einfach gehalten werden, wenn das jeweilige Einzelspreizelement, insbesondere an seinem Verbindungsbereich, ein Gelenk ausgestaltet, um eine Kippbewegung im Sinne der Erfindung zu ermöglichen.

In diesem Zusammenhang ist es vorteilhaft, wenn der Verbindungsbereich einen Biegebereich umfasst, welcher eine Kippachse des jeweiligen Einzelspreizelements aufweist, um welche herum das jeweiligen Einzelspreizelement gegenüber dem Trägerteil kippbar ist. Mittels des Biegebereichs bzw. der Kippachse kann ein solches Gelenk konstruktiv einfach in das jeweilige Einzelspreizelement integriert werden.

Eine weitere vorteilhafte Ausführungsvariante sieht vor, dass die Kippachse eine Vertikalebene aufspannt, auf deren der Kontaktfläche zugewandten ersten Vertikalebenenseite der Kontaktflächenbereich angeordnet ist und auf deren der Kontaktfläche abgewandten, zweiten Vertikalebenenseite der Verbindungsbereich angeordnet ist.

Hierdurch lassen sich insbesondere Kippeffekte und Auslenkungseffekte an dem jeweiligen Einzelspreizelement besonders gut aufeinander abstimmen.

Vorteilhafterweise weist das jeweilige Einzelspreizelement in diesem Zusammenhang wenigsten zwei Verformungsbereiche auf, welche auf unterschiedlichen Vertikalebenenseite angeordnet sind.

Bevorzugt verläuft diese Vertikalebene bezogen auf eine Schnittlinie mit dem Trägerteil lotrecht zu dem Trägerteil.

Kumulativ oder alternativ ist es vorteilhaft, wenn die Vertikalebene senkrecht zu der Rotationsachse der Spreizeinrichtung angeordnet ist.

Insgesamt kann hierdurch der Verlauf der Vertikalebene eindeutig an der Spreizeinrichtung bestimmt werden, wodurch sich auch die Lagen des Kontaktflächenbereichs und des Verbindungsbereichs präzise bestimmen lassen.

Die Vertikalebene verläuft hierbei durch das jeweilige Einzelspreizelement.

Beispielsweise reicht der Kontaktflächenbereich des jeweiligen Einzelspreizelements von dem freien Ende des jeweiligen Einzelspreizelements bis an die Vertikalebene heran, wobei der Kontaktflächenbereich auf der ersten Vertikalebenenseite der Vertikalebene liegt.

Der Verbindungsbereich hingegen erstreckt sich hierbei dann auf der zweiten Vertikalebenenseite der Vertikalebene von dem Trägerteil des jeweiligen Einzelspreizelements bis an die Vertikalebene heran.

Die Spreizeinrichtung kann nochmals positiv weiterentwickelt werden, wenn das jeweilige Einzelspreizelement wenigstens zwei Verformungsbereiche mit gegensätzlichen und sich zumindest teilweise gegenseitig aufhebenden Verlagerungseffekten insbesondere hinsichtlich der Kontaktfläche aufweist.

Aus den gleichen Gründen ist es vorteilhaft, wenn das jeweilige Einzelspreizelement wenigstens zwei Verformungsbereiche mit gegensätzlichen und sich zumindest teilweise gegenseitig aufhebenden Verformungseffekten insbesondere hinsichtlich der Kontaktfläche aufweist.

Allgemein kann festgestellt werden, dass sich das jeweilige Einzelspreizelement in Richtung seiner Öffnung neigt, wenn ausreichend hohe Fliehkräfte auf dieses Einzelspreizelemente einwirken, etwa durch Rotation der Spreizeinrichtung bzw. der Breitstreckwalze.

Außerdem kann die vorliegende Spreizeinrichtung günstig weiterentwickelt werden, wenn die Spreizeinrichtung aus einem elastischen Werkstoff, insbesondere auch einem thermoplastischen Werkstoff, hergestellt ist.

Vorzugsweise besteht die Spreizeinrichtung zumindest zu mehr als 50 %, vorzugsweise zu mehr als 80 %, und besonders bevorzugt zu mehr als 90 % aus elastischem Werkstoff, abgesehen von eingemengten Partikeln.

Die Aufgabe wird nach einem zweiten Aspekt der Erfindung auch von einer Breitstreckwalze zum seitlichen Ausbreiten einer flächigen Materialbahn in axiale Spreizrichtungen mit einer Umfangsfläche, mittels welcher die Breitstreckwalze mit der flächigen Materialbahn in Wirkkontakt bringbar ist, mit einer Rotationsachse, um welche die Breitstreckwalze rotierbar ist, und mit Spreizeinrichtungen umfassend eine Vielzahl an Einzelspreizelementen, welche die Umfangsfläche bilden, gelöst, wobei sich die Breitstreckwalze durch Spreizeinrichtungen nach hier vorgeschlagenen Merkmalen auszeichnet. Hierdurch kann eine Breitstreckwalze besonders betriebssicher und damit auch effektiv betrieben werden

Des Weiteren kann auch eine Breitstreckwalze zum seitlichen Spreizen einer flächigen Materialbahn in axiale Spreizrichtungen mit einer umhüllenden Umfangsfläche vorteilhaft sein, mittels welcher die Breitstreckwalze mit einer flächigen Materialbahn in Wirckontakt gebracht wird, mit einer Rotationsachse, um welche die Breitstreckwalze drehbar ist, und mit einer Vielzahl von Spreizelementringen gelöst, welche die Umfangsfläche bilden und welche von der Mitte zum Walzenrand in Spreizrichtung montiert sind, und die Spreizelementringe mit Einzelspreizelementen so ausgestattet sind, dass jedes Einzelspreizelement ohne Berührung mit den Nachbarelementen sich mit und ohne Belastung frei bewegen kann, wobei die Lage des Schwerpunktes von jedem Einzelspreizelementes so gestaltet ist, dass sich die Wirkung der Fliehkraft bei hohen Geschwindigkeiten mindestens zum Teil nicht auf eine Durchmesservergrößerung der Spreizwalze auswirkt und die Kontaktflächen parallel oder unter einem kleinen Winkel gegenüber der Warenbahn unter Fliehkrafteinwirkung verharren, und die Spreizung unter allen Betriebsbedingungen ausführen, und die Einzelspreizelemente frei und ohne Berührung mit irgendwelchen begrenzenden Mitteln in ihrer Funktionslage auch ohne Materialbahnkontakt verbleiben.

Hierdurch kann eine kritische radiale Auslenkung insbesondere der Kontaktfläche des Einzelspreizelements nach radial weiter außen vermieden werden bzw. signifikant reduziert werden.

Zudem sieht eine nicht erfindungsgemäße Breitstreckwalze zum seitlichen Spreizen einer flächigen Materialbahn in axiale Spreizrichtungen mit einer umhüllenden Umfangsfläche, mittels welcher die Spreizwalze mit einer flächigen Materialbahn in Wirkkontakt gebracht wird, mit einer Rotationsachse, um welche die Breitstreckwalze drehbar ist, und mit einer Vielzahl von Spreizelementringen vor, welche die Umfangsfläche bilden und von der Mitte zum Walzenrand in Spreizrichtung montiert sind, und die Spreizelementringe mit Einzelspreizelementen so ausgestattet sind, dass jedes Einzelspreizelement ohne Berührung mit den Nachbarelementen sich mit und ohne Belastung frei bewegen kann, wobei die Lage des Schwerpunktes des Stegteiles und die Lage des Schwerpunktes des Kontaktteiles gegenüber einem Drehpunkt so ausgestaltet sind, dass sich die Wirkung der Fliehkräfte zumindest teilweise aufhebt und somit keine oder nur eine geringe Durchmesservergrößerung der Spreizwalze auftritt.

Auch hierdurch kann eine kritische radiale Auslenkung insbesondere der Kontaktfläche des Einzelspreizelements nach radial weiter außen vermieden werden bzw. signifikant reduziert werden.

Eine weitere vorteilhafte Ausführungsvariante sieht vor, dass das Massevolumen des Verbindungsbereichs größer ist als das Massevolumen des Kontaktflächenbereichs und beide Teile gegenüber dem Drehpunkt auf verschiedenen Seiten angeordnet sind und sich dadurch die Fliehkräfte in ihrer Wirkung zumindest teilweise aufhebt. Hierdurch kann eine kritische radiale Auslenkung insbesondere der Kontaktfläche des Einzelspreizelements nach radial weiter außen noch besser vermieden werden bzw. signifikant reduziert werden.

Sind die Einzelspreizelemente einreihig auf dem Trägerteil angebracht und so zu einem Spreizelementring ausgeführt, kann eine einfach bauende Spreizeinrichtung realisiert werden.

Sind die Einzelspreizelemente doppelreihig auf dem Trägerteil angebracht und so zu einem Spreizelementring ausgeführt, können nachteilige durchgängig umlaufende Umfangsspalte konstruktiv einfach vermieden werden.

Sind doppelreihige Ausführungen zur Erleichterung der Montage und als Verdrehsicherung mit Zusatzausrüstungen an dem Trägerteil versehen, die als Verzahnung oder mit Führungselementen in Form von Führungsnasen ausgestaltet sind, kann ebenfalls die Betriebssicherheit erhöht werden.

Vorteilhafterweise ist jedes Einzelspreizelement C-förmig gestaltet und die Form des C's ist so ausgeführt, dass der Verbindungsbereichs und der Kontaktflächenbereich ohne erkennbare Stufe als abgerundeter Bogen geformt sind und der Verbindungsbereich in Richtung Trägerteil tailliert ausgeführt ist.

Nachfolgend sind noch weitere vorteilhaft Merkmale erläutert: Die Einzelspreizelemente sind jeweils mit dem Trägerteil verbunden, der auf einem Rotationskörper montiert wird. Eine Vielzahl von als Ringe ausgebildeten Spreizeinrichtungen bildet eine Breitstreckwalze. Jedes Einzelspreizelement besteht aus einem Stegteil in Gestalt des Verbindungsbereichs und einem Kontaktteil in Gestalt eines Kontaktflächenbereichs. Das Kontaktteil stellt den Wirkkontakt mit der Warenbahn her, das Stegteil verbindet das Trägerteil mit dem Kontaktteil. Im Übergangsbereich Trägerteil/Stegteil ist bevorzugt der geringste Querschnitt des Einzelspreizelements vorgesehen, das heißt, dass hier die Hauptdreh-, Kipp- oder Neigebewegung des Einzelspreizelements stattfindet, und somit ist in diesem Übergangsbereich die größte Flexibilität des Einzelspreizelements vorhanden.

Die Formgebung eines Einzelspreizelements ist im vorliegenden Fall vorzugsweise so ausgeführt, dass das Stegteil und das Kontaktteil einen großen gemeinsamen Bogen beschreiben, der übergangslos vom Kontaktteil in das Stegteil übergeht.

Dadurch ist gewährleistet, dass unabhängig vom Belastungsfall der Kontaktbereich immer leicht gebogen und ohne scharfe Kante die Warenbahn berührt.

Der Angriffspunkt von Fliehkräften ist normalerweise der Schwerpunkt des Einzelspreizelementes.

Je weiter der Schwerpunkt von dem Drehpunkt bzw. der Kippachse entfernt angeordnet ist, umso größer wird das Drehmoment durch die Fliehkräfte und umso größer ist die Vergrößerung des Durchmessers nach außen.

Ein Ziel der vorliegenden Erfindung muss es demnach sein, den Schwerpunkt des Einzelspreizelementes so nah wie möglich an dem Drehpunkt bzw. der Kippachse zu legen, um das Drehmoment durch die Fliehkräfte zu reduzieren und die Wirkung der Fliehkräfte zumindest teilweise zu neutralisieren.

Dazu ist es notwendig, die Verteilung der Masse jedes Einzelspreizelements in die Nähe des Drehpunktes bzw. der Kippachse zu verlegen, damit die einzelnen, auf die Masse wirkenden Fliehkräfte sich gegenseitig zumindest teilweise aufheben.

Das heißt, insbesondere die Verteilung der Masse bestimmt das Verhalten jedes Einzelspreizelements.

So ist es möglich, ohne äußere Beeinflussung durch Anschläge oder andere Begrenzungen die Fliehkräfte in ihrer Wirkung zumindest einzuschränken und insbesondere eine berührungslose Durchmesserbegrenzung zu schaffen, bei der die Bewegungsfreiheit jedes Einzelspreizelements voll erhalten bleibt und damit auch die uneingeschränkte Funktionsfähigkeit der Spreizung schon bei der leichtesten Berührung durch die Warenbahn, wobei die Parallelität der Kontaktfläche zur Warenbahn sich nur im zulässigen Bereich verändert, ohne die Funktion des Breitstreckens zu verändern.

Die Anordnung der Einzelspreizelemente auf dem Trägerteil kann sowohl einreihig als auch doppelreihig erfolgen.

Bei der doppelreihigen Lösung ist jedes zweite Einzelspreizelement um maximal eine halbe Kontaktflächenlänge axial versetzt. Dadurch wird es möglich, beim Montieren der Spreizeinrichtungen bzw. der Spreizringe auf den Rotationskörper diese so anzuordnen, dass die Einzelspreizelemente ineinandergreifen und dadurch "auf Lücke" ohne durchgehenden Ringspalt montiert werden.

Da diese Spreizeinrichtungen bzw. Spreizringe bevorzugt nach dem Spritzgussverfahren hergestellt werden, können sie sehr genau gefertigt werden und erlauben auch Ausführungen, die zum Beispiel nach dem Strangpressverfahren nicht möglich sind.

So kann zum Beispiel das Stegteil so ausgeführt werden, dass es zum Trägerteil hin tailliert ausgeführt ist und so das Spreizverhalten durch die Formgebung beeinflusst werden kann.

Der Begriff "Spreizelementering" umfasst im Sinne der Erfindung im Wesentlichen ein Trägerteil mit daran angeordneten Einzelspreizelementen, welche nach radial weiter außen über die äußere Oberfläche des Trägerteils auskragen.

Das Trägerteil kann etwa als offener Ring oder aber bevorzugt als geschlossener Ring realisiert sein.

Das Spritzgussverfahren erlaubt auch die Herstellung von endlichen Profillängen in Form von offenen Ringen, die entsprechend den hier besprochenen Formen der Einzelspreizelemente gefertigt werden.

Durch geeignete Ausführungen der Profilenden können diese Einzelprofillängen durch geeignete Verfahren wie Kleben oder ähnlichem zu Endlosprofilen formschlüssig zusammengesetzt werden, wobei die Eigenschaften und Detailausführungen hinsichtlich ihrer Funktion denen der hier beschriebenen Einzelspreizelementen entsprechen.

Mit diesen Endlosprofilen können Walzenträger mit beliebigem Durchmesser durch Umwickeln zu Breitstreckwalzen hergestellt werden. Die Umwickeltechnik erfolgt jeweils von der Walzenmitte nach außen mit der entsprechenden Spreizausrichtung zum Walzenende.

Wichtig ist bei allen Lösungen, dass der Abstand jedes Einzelspreizelementes zum benachbarten Spreizelement so groß ist, dass eine ausreichende Bewegungsfreiheit besteht, um die Spreizfunktion ohne Beeinflussung eines Nachbarelementes durchführen zu können. Denn jedes Einzelspreizelement führt seine Spreizfunktion individuell aus. Dies ist unter anderem ein wesentlicher Faktor für die hervorragende Spreizfunktion.

Die Aufgabe der Erfindung wird nach einem dritten Aspekt darüber hinaus auch von einem Verfahren zum Spreizen einer flächigen Materialbahn mit Spreizeinrichtungen, insbesondere einer Breitstreckwalze, gelöst, bei welchem eine Vielzahl an elastisch verformbaren Einzelspreizelementen der Spreizeinrichtung mit der flächigen Materialbahn in Wirkkontakt gebracht wird, und bei welchem die Spreizeinrichtung während des Spreizens der flächigen Materialbahn um eine Rotationsachse rotiert, und bei welchem die Kontaktfläche des jeweiligen Einzelspreizelements durch Fliehkräfte nach radial außen ausgelenkt wird, wobei eine radiale Auslenkung der Kontaktfläche in radial nach außen gerichteter Radialrichtung durch auf das jeweilige Einzelspreizelement wirkenden Fliehkräfte reduziert wird, während das Einzelspreizelement durch die Fliehkräfte um eine Kippachse gekippt wird.

Hierdurch kann eine kritische radiale Auslenkung insbesondere der Kontaktfläche des Einzelspreizelements nach radial weiter außen vermieden werden bzw. signifikant reduziert werden.

Außerdem kann eine Verwendung eines Einzelspreizelements an einer Breitstreckwalze zur Reduzierung einer radial nach außen gerichteten Auslenkung einer an dem Einzelspreizelement angeordneten Kontaktfläche in Abhängigkeit von auf das Einzelspreizelement wirkenden Fliehkräften vorteilhaft sein.

Hierdurch kann eine kritische radiale Auslenkung insbesondere der Kontaktfläche des Einzelspreizelements nach radial weiter außen vermieden werden bzw. signifikant reduziert werden.

Auch sei darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

An dieser Stelle sei noch beansprucht, dass das beschriebene Verfahren auch noch durch weitere hier beschriebene technische Merkmale, insbesondere durch Merkmale der Spreizeinrichtung bzw. der Breitstreckwalze, ergänzt werden können, um das Verfahren vorteilhaft weiterzuentwickeln bzw. Verfahrensspezifikationen noch präziser darstellen bzw. formulieren zu können.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft eine Breitstreckwalze und Spreizeinrichtungen hierfür mit Einzelspreizelementen dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine Schnittansicht einer Breitstreckwalze mit ringförmigen Spreizeinrichtungen umfassend jeweils eine Vielzahl an Einzelspreizelementen;
- Figur 2: schematisch eine Schnittansicht einer einzelnen ringförmigen Spreizeinrichtung aus der Figur 1;
- Figur 3: schematisch eine geschnittene Ansicht eines Einzelspreizelements der in der Figur 2 dargestellten ringförmigen Spreizeinrichtung;
- Figur 4: schematisch eine weitere geschnittene Ansicht des um 90° gedrehten Einzelspreizelements aus der Figur 3;
- Figur 5: schematisch eine Detailansicht eines anderen Einzelspreizelements der in der Figur 2 dargestellten ringförmigen Spreizeinrichtung in einem unbelasteten Zustand bzw. Ruhezustand und in einem durch eine flächige Materialbahn belasteten Arbeitszustand;
- Figur 6: schematisch eine Detailansicht eines Einzelspreizelements mit visuell hervorgehobenem Kontaktflächenbereich und Verbindungsbereich mit jeweiligen hieran dargestellten Einzelschwerpunkten;
- Figur 7: schematisch eine Detailansicht des Kontaktflächenbereichs aus der Figur 6 in einem Ruhezustand (gestrichelte Darstellung) und in einem durch Fliehkräfte beaufschlagten Rotationszustand;
- Figur 8: schematisch eine Detailansicht des Verbindungsbereichs aus der Figur 6 in einem Ruhezustand (gestrichelte Darstellung) und in einem durch Fliehkräfte beaufschlagten Rotationszustand;
- Figur 9: schematisch eine weitere Detailansicht des Kontaktflächenbereichs und des Verbindungsbereichs aus den Figuren 6 bis 8 mit nochmaliger Fliehkräftedarstellung;
- Figur 10: schematisch eine Schnittansicht einer alternativen Breitstreckwalze mit alternativen ringförmigen Spreizeinrichtungen umfassend doppelreihig angeordnete Einzelspreizelemente;
- Figur 11: schematisch eine Schnittansicht einer einzelnen alternativen ringförmigen Spreizeinrichtung aus der Figur 10;
- Figur 12: schematisch eine Schnittansicht einer einzelnen weiteren alternativen ringförmigen Spreizeinrichtung mit einem zusätzlichen Vielzahnprofil;
- Figur 13: schematisch eine Schnittansicht einer einzelnen anderen ringförmigen Spreizeinrichtung mit zusätzlichen Führungsnasen; und
- Figur 14: schematisch eine Aufsicht einer alternativen Breitstreckwalze mit doppelreihigen ringförmigen Spreizeinrichtungen.

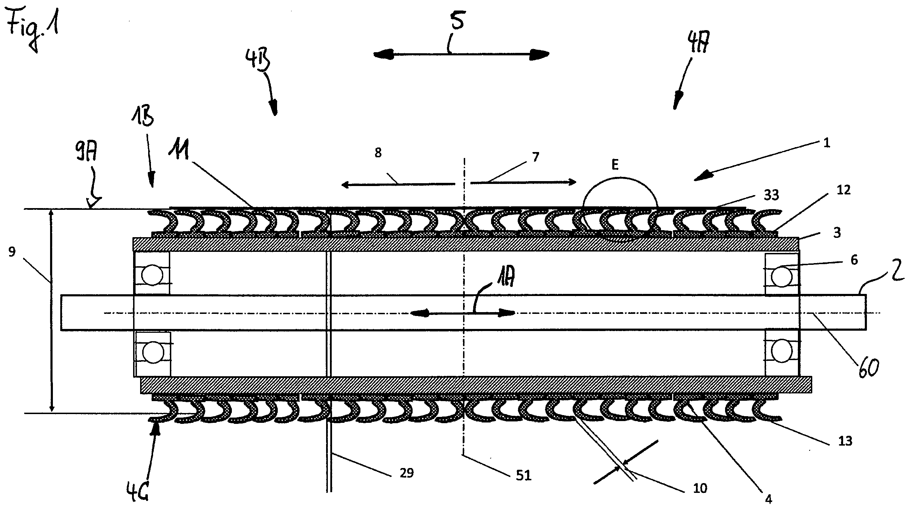

Bei dem in der Figur 1 gezeigten ersten Ausführungsbeispiel ist eine Breitstreckwalze 1 gemäß vorliegender Erfindung dargestellt. Die Breitstreckwalze 1 besteht im Wesentlichen aus einer Welle 2, auf die über Wälzlager 6 ein rohrförmiger Rotationskörper 3 drehbar aufmontiert ist.

Auf diesem Rotationskörper 3 sind mehrere Spreizeinrichtungen 4 so montiert, dass sie von der Mitte bzw. Mittellinie 51 der Breitstreckwalze 1 in Axialrichtung 1A der Breitstreckwalze 1 bzw. der Spreizeinrichtungen 4 (nur exemplarisch) axial nach außen spreizen; und zwar in dem Fall der rechts neben der Mittellinie 51 angeordneten Spreizeinrichtungen 4A, die in Spreizhauptrichtung 5 entsprechend Ihrer Anordnung nach rechts 7 spreizen, und der links neben der Mittellinie 51 angeordneten Spreizeinrichtungen 4B, die in Spreizhauptrichtung 5 demgegenüber entsprechend nach links 8 spreizen.

Die Spreizeinrichtungen 4 sind in diesem ersten Ausführungsbeispiel als Spreizelementeringe 4C (nur exemplarisch beziffert) ausgebildet.

Die Spreizeinrichtungen 4 sind aus einem elastischen gummiähnlichen Material im Spritzgießverfahren hergestellt.

Die Spreizeinrichtungen 4 besitzen einerseits jeweils ein ringförmiges elastisch verformbares Trägerteil 12 bzw. einen Tragring, mittels welchem sie an dem Rotationskörper 3 der Breitstreckwalze 1 angeordnet werden können. Andererseits umfassen die Spreizeinrichtungen 4 jeweils eine Vielzahl an elastisch verformbaren Einzelspreizelemente 11 zum Erzielen einer in Spreizhauptrichtung 5 gerichteten Spreizwirkung auf eine mit den Einzelspreizelementen 11 in Wirkkontakt befindlichen flächigen Materialbahn 33 bzw. Warenbahn.

Der jeweils durch die Spreizeinrichtung 4 realisierte Außendurchmesser 9 ist gleichzeitig die Umhüllende 9A der Breitstreckwalze 1, wobei dieser Außendurchmesser 9 bzw. diese Umhüllende 9A von Kontaktflächen 13 der Einzelspreizelemente 11 gebildet wird.

Das ringförmige Trägerteil 12 bzw. der Tragring liegt bündig auf dem Rotationskörper 3 auf und besteht - wie auch die Spreizelementringe 4C aus elastischem gummiähnlichem Material.

Die Wirkung der Spreizeinrichtungen 4 besteht darin, dass durch den Warenbahndruck der darüber laufenden flächigen Materialbahn 33 eine leichte Verformung zum jeweiligen Walzenrand 1B entsteht, die zwar klein ist, aber sich pro Umdrehung der Breitstreckwalze 1 bzw. der Spreizeinrichtungen 4 entsprechend der Anzahl der Einzelspreizelemente 11 wiederholt, so dass die Summe der Verformung zu einer deutlichen, aber schonenden Spreizung der flächigen Materialbahn 33 führt.

Da für die jeweilige Verformung ein entsprechender Spalt 10 von 1 bis 2 mm vorgesehen sein muss, bildet sich bei der Montage der Spreizeinrichtungen 4 auf dem Rotationskörper 3 jeweils ein umlaufender Ringspalt 29. Dieser Ringspalt 29 entsteht bei einreihigen Spreizeinrichtungen 4, bei doppelreihigen Spreizeinrichtungen 4 tritt er in dieser durchgängig umlaufenden Form nicht auf.

Diese Breitstreckwalzen 1 werden üblicherweise nicht angetrieben und sie spreizen in beiden Drehrichtungen gleich gut, unabhängig davon, in welcher Drehrichtung sich die Breitstreckwalze 1 bzw. die Spreizeinrichtungen 4 um deren Rotationsachse 60 drehen bzw. rotieren.

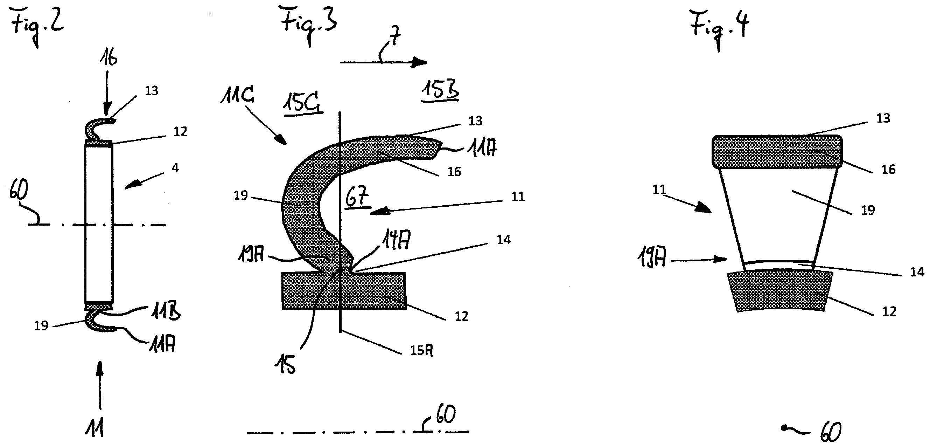

Gemäß der Darstellung nach der Figur 2 ist beispielhaft der Aufbau einer einreihigen Spreizeinrichtung 4 gezeigt, die im Wesentlichen aus dem Trägerteil 12 und der Vielzahl an Einzelspreizelementen 11 besteht.

Das jeweilige Einzelspreizelement 11 wiederum weist einerseits an seinem dem Trägerteil 12 abgewandten freien Ende 11A einen Kontaktflächenbereich 16 (bzw. ein Kontaktteil) mit der Kontaktfläche 13 zum Wechselwirken mit der flächigen Materialbahn 33 auf. Andererseits ist das Einzelspreizelement 11 an seinem dem freien Ende 11A abgewandten, zweiten Ende 11B an dem Trägerteil 12 angeordnet.

Der Kontaktflächenbereich 16 ist mittels eines 19 (bzw. Stegteils bzw. Verbindungsstegs) an das Trägerteil 12 angebunden. Die spezielle Form des Verbindungsbereichs 19 bzw. Verbindungssteges bestimmt unter anderem auch die Spreizeigenschaften und das Verhalten bei hohen Geschwindigkeiten.

Jedes Einzelspreizelement 11 hat im Wesentlichen die Form des Großbuchstaben C, wie insbesondere auch gemäß der Darstellung nach Figur 3 gezeigt ist.

Genauer gesagt besitzt jedes Einzelspreizelement 11 einen sichelförmigen Verformungskörper 11C.

Die Figur 3 zeigt schematisch einen vergrößerten Querschnitt insbesondere durch die Spreizeinrichtung 4. Wie vorstehend bereits erläutert, besteht die Spreizeinrichtung 4 im Wesentlichen aus dem Trägerteil 12, welches ringförmig ausgeführt ist. Das Trägerteil 12 stellt die Verbindung zum Rotationskörper 3 (vgl. Figur 1) her und es ist gleichzeitig Ankerpunkt für alle Einzelspreizelemente 11 der Spreizeinrichtung 4.

Der Verbindungsbereich 19 ist in diesem Ausführungsbeispiel zum Trägerteil 12 hin tailliert ausgeführt, wie deutlich aus der Darstellung der Figur 4 zu erkennen ist.

Diese Taillierung bestimmt auch die Steifigkeit des Einzelspreizelementes 11 und wird durch die Spritzgießform vorgegeben.

Zur genauen Festlegung des geringsten Querschnittes und damit zur Festlegung der Flexibilität des Einzelspreizelementes 11 ist zusätzlich eine Ringkerbe 14 als vorgesehen, welche eine Biegelinie (nicht gesondert beziffert) an dem Übergangsbereich 14A zwischen dem Verbindungsbereich 19 und dem Trägerteil 12 markiert.

Das Einzelspreizelement 11 weist zusätzlich einen Biegebereich 19A an dem Verbindungsbereich 19 auf.

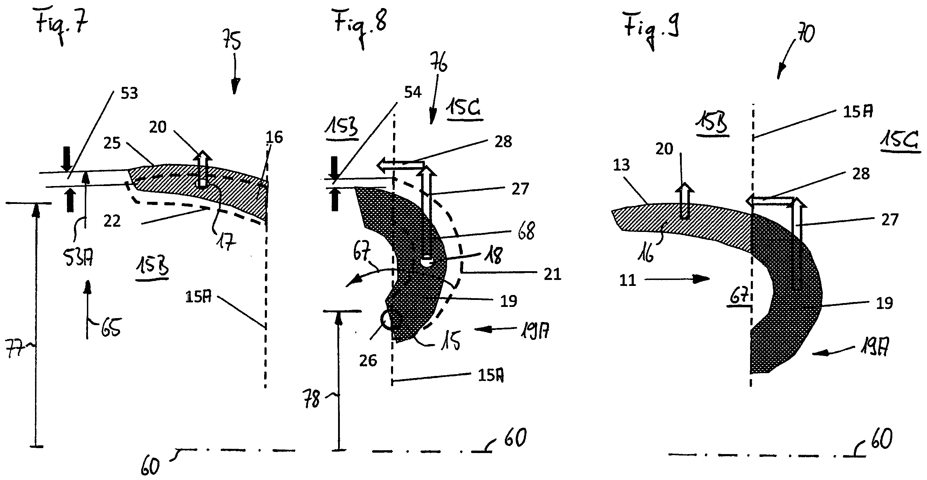

In diesem Biegebereich 19A ist eine Kippachse 15 (hier nur schematisch eingezeichnet) bzw. Drehachse ausgebildet, um welche das Einzelspreizelement 11 mittels Fliehkräfteeinwirkung (vgl. insbesondere Figuren 7 bis 9) zumindest bereichsweise oder zur Gänze in Richtung des freien Endes 11A idealisiert kippbar ist.

Die Kippachse 15 formuliert gemeinsam mit der Rotationsachse 60 der Spreizeinrichtung 4 eine Vertikalebene 15A, welche senkrecht zu der Rotationsachse 60 angeordnet ist. Mittels der Vertikalebene 15A ist an der Spreizeinrichtung 4 jeweils eine erste Vertikalebenenseite 15B und eine zweite Vertikalebenenseite 15C definiert.

Die Besonderheit der Formgebung in diesem Ausführungsbeispiel besteht darin, dass der Verbindungsbereich 19 (bzw. das Stegteil) und der Kontaktflächenbereich 16 (bzw. das Kontaktteil) eine durchgehende Bogenform ohne kritische Kante oder andere Unstetigkeit aufweisen. So ist gewährleistet, dass unabhängig von der Neigung der Kontaktfläche 13 - das heißt auch unabhängig von der Belastung durch die flächige Materialbahn 33 - immer eine große und glatte Kontaktfläche 13 für die flächige Materialbahn 33 zur Verfügung steht. So können Markierungen auf der flächige Materialbahn 33 durch scharfe Kanten des Einzelspreizelements 11 sicher vermieden werden.

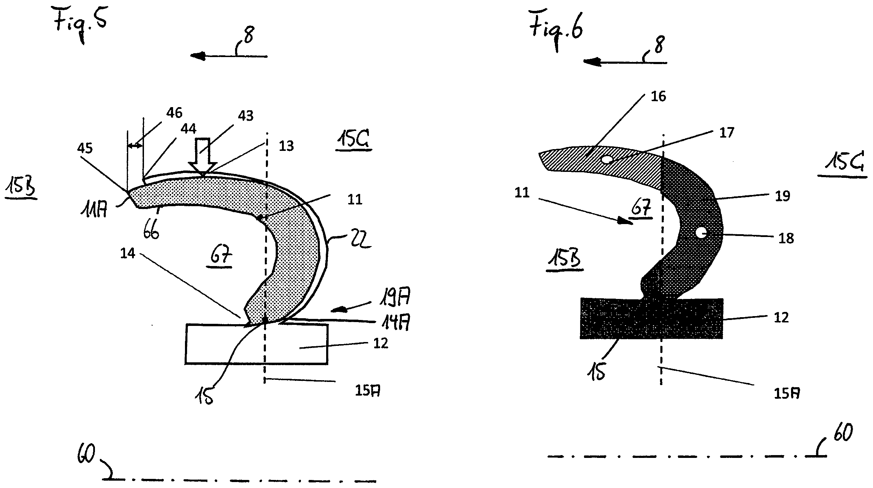

Gemäß der Darstellung nach der Figur 5 ist ebenfalls ein Einzelspreizelement 11 gezeigt, das in diesem Fall nach links in die linke Spreizrichtung 8 spreizt. Durch die von der flächigen Materialbahn 33 bzw. der Warenbahn ausgeübten Kraft 43 wird das Einzelspreizelement 11 aus seiner Ausgangslage 25 (Ruhezustand) hinaus geringfügig nach radial unten gedrückt und erhält dadurch eine neue Belastungslage 66, die insbesondere an der Lageveränderung hinsichtlich der entsprechend dargestellten der Spitzen 44 und 45 des freien Endes 11A des Einzelspreizelements 11 erkennbar ist. Durch die geänderte Lage entsteht der Spreizspalt 46. Dieser Spreizspalt 46 stellt die eigentliche erzielbare Spreizung des Einzelspreizelements 11 dar. Er ist in der Realität nur wenige Zehntel Millimeter groß, aber die Summe aller kleinen Bewegungen ergibt eine starke, aber schonende Spreizung an der flächigen Materialbahn 33, da sich dieser Vorgang allein pro Walzenumdrehung 30 bis 40 mal, je nach Anzahl der Einzelspreizelemente 11, wiederholt.

In Figur 6 ist das gleiche Einzelspreizelement 11 aus der Figur 5 dargestellt. In Bezug auf die Kippachse 15 bzw. die Vertikalebene 15A ist auf der zweiten Vertikalebenenseite 15C (rechte Seite) der Verbindungsbereich 19 mit seinem Einzelschwerpunkt 18 dargestellt, auf der ersten Vertikalebenenseite 15B (linke Seite) der Kontaktflächenbereich 16 mit seinem Einzelschwerpunkt 17.

Die beweglichen bzw. verformbaren Teile sind also der Verbindungsbereich 19 und der Kontaktflächenbereich 16, das Trägerteil 12 dient als Fixpunkt für jedes Einzelspreizelement 11.

Die gestrichelte vertikale Linie stellt hierbei die Vertikalebene 15A da, in welcher die Kippachse 15 bzw. die Biegelinie liegt, und die Vertikalebene 15A teilt das Einzelspreizelement 11 in eine linke und rechte Seite und sie bestimmt durch die Lage den Einfluss von Fliehkräften (vgl. Figuren 7 bis 9) auf die Verformung der Einzelkomponenten Kontaktflächenbereich 16 und Verbindungsbereich 19. Diese Kippachse 15 wirkt wie ein Drehpunkt, um den sich das Einzelspreizelement 11 dreht bzw. neigt; und zwar in Richtung der Öffnung 67 des Einzelspreizelements 11.

Die Darstellung des Kontaktflächenbereichs 16 zeigt gemäß der Darstellung nach Figur 7 eine Durchmesservergrößerung 53 bzw. eine radiale Auslenkung 53A aufgrund von Fliehkräftewirkungen. Durch Fliehkräfte 20 verändert sich der Kontaktflächenbereich 16 aus seiner Ausgangslage 22 (gestrichelte Linie) heraus in radialer Auslenkrichtung 65 in die Auslenklage 25. Diese Fliehkräfte 20 entstehen und wirken aufgrund einer entsprechenden Rotation der Spreizeinrichtung 4, wodurch der Kontaktflächenbereich 16 sich in Wirkrichtung der Fliehkräfte 20 nach radial außen bewegt und eine Durchmesservergrößerung 53 an der Spreizeinrichtung 4 bzw. der Breitstreckwalze 1 erzeugt.

Auf den in der Figur 8 gezeigten Verbindungsbereich 19 der rotierenden Spreizeinrichtung 4 wirken Fliehkräfte 27 nach radial außen und erzeugen um die Kippachse 15 bzw. den fiktiven Drehpunkt 26 eine Fliehkräftekomponente 28 in Axialrichtung 1A (vgl. Figur 1), welche eine Kippbewegung in Kipprichtung 67 bzw. Drehung insbesondere des Verbindungsbereichs 19 um den fiktiven Drehpunkt 26 erzeugt und so den Verbindungsbereich 19 aus der Ursprungslage 21 in die neue Kipplage 68 bewegt. Diese Bewegung ist mit einer Durchmesserreduzierung 54 (siehe Figur 8) verbunden, das heißt die Durchmesservergrößerung 53 (Figur 7) und die Durchmesserreduzierung 54 (Figur 8) heben sich zumindest teilweise auf und halten die Kontaktfläche 13 in einer günstigen Betriebslage 70 (vgl. Figur 9).

Diese auf das Einzelspreizelement 11 wirkenden Fliehkräfte 20 und 27 (siehe insbesondere Figur 9) und die sich ergebende Fliehkräftekomponente 28, die der Fliehkräftebewegung nach radial außen entgegenwirkt, verhindern eine zu große Bewegung jedes Einzelspreizelements 11, insbesondere des Kontaktflächenbereichs 16, nach radial außen und halten so jedes Einzelspreizelement 11 gegenüber der flächigen Materialbahn 33 in einer optimalen Betriebslage 70, um die flächige Materialbahn 33 bzw. die Warenbahn auch bei geringem Warenbahndruck dadurch zu spreizen, dass jedes Einzelspreizelement 11 auch auf geringen Druck schon reagieren kann und eine Bewegung bzw. Spreizung in eine Spreizhauptrichtung 5 vollzieht.

Hervorzuheben ist hierbei, dass jedes Einzelspreizelement 11 immer voll beweglich ist und jede Krafteinwirkung immer eine Spreizbewegung auslöst, wobei jedes Einzelspreizelement 11 völlig unabhängig von jedem anderen Einzelspreizelement 11 arbeitet und dadurch kein anderes Einzelspreizelement 11 beeinflusst wird. Dies ist einer der wesentlichen Vorteile gegenüber vielen anderen Systemen zum Spreizen von flächigen Materialbahnen 33.

Es sei auch noch erwähnt, dass das Einzelspreizelement 11 in diesem Ausführungsbeispiel zwei Verformungsbereiche 75 und 76 mit unterschiedlichen Hauptverformungsrichtungen 65 bzw. 67 aufweist, wobei die wenigstens zwei Verformungsbereiche 75 und 76 auf unterschiedlichen Radialhöhen 77 bzw. 78 angeordnet sind (siehe Figuren 7 und 8).

Bei den einreihigen Ausführungen kann zwischen den Einzelspreizringen 11 im Betriebszustand ein umlaufende Ringspalt 29 entstehen (vgl. Figur 1). Dieser kann bei sehr dünnen flächigen Materialbahnen 33 bzw. Warenbahnen, zum Beispiel unter 10 bis 15 micron bzw. Mikrometer, dazu führen, dass die Warenbahnkante der flächigen Materialbahn 33 in einen solchen Ringspalt 29 abknickt und eine Seitenfalte an der flächigen Materialbahn 33 hervorruft.

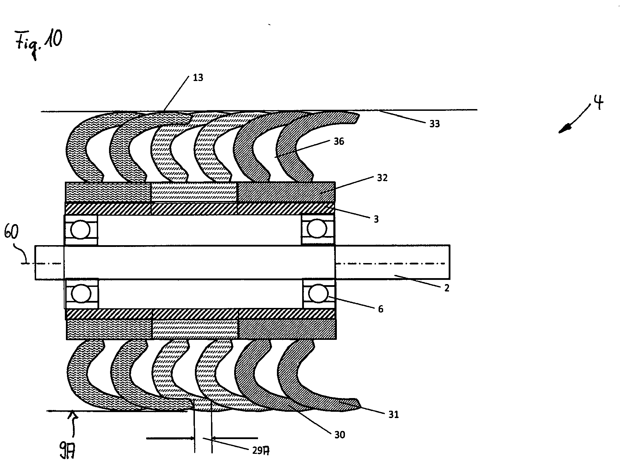

Um Bereiche zu vermeiden, die kein oder ein nur eingeschränktes Spreizverhalten aufweisen, können Spreizeinrichtungen 4 mit Doppelreihen 36 eingesetzt werden. Hierbei sind die Einzelspreizelemente 11 in zwei Reihen auf dem breiteren ringförmigen Trägerteil 32 angebracht (siehe Figur 10). Die Einzelspreizelemente 30 und 31 sind so angeordnet, dass jeweils benachbarte Einzelspreizelemente 30 bzw. 31 um maximal eine halbe Kontaktflächenlänge axial zueinander versetzt sind.

Die notwendige Bewegungsfreiheit der einzelnen Einzelspreizelemente 30 und 31 wird durch den Abstand 29A erreicht, wobei sich durch den Versatz der Kontaktflächen 13 bzw. der Kontaktflächenbereiche 16 eine sehr gleichmäßige Umhüllende 9A ergibt, auf der die flächige Materiabahn 33 bzw. die Warenbahn sehr schonend in Wirkkontakt mit den Kontaktflächen 13 aufläuft. Dadurch wird ein durchgehender Ringspalt 29 (vgl. Figur 1) vermieden und die damit verbundenen Nachteile des Einknickens von Warenbahnenden.

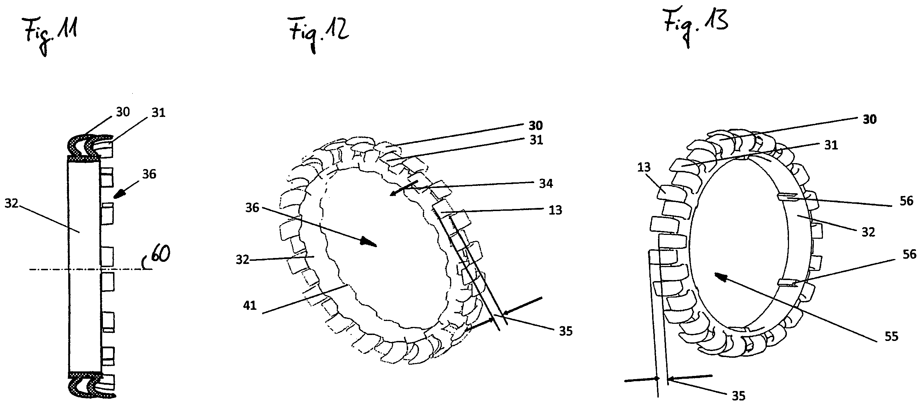

Gemäß der Darstellung nach der Figur 11 ist ein Schnitt durch eine solche doppelreihig besetzte Spreizeinrichtung 36 mit den in gleicher Axialrichtung 1A spreizenden Einzelspreizelementen 30 und 31 gezeigt, die auf das Trägerteil 32 aufgebracht sind.

In der Figur 12 ist eine solche mit Doppelreihen 36 besetzte Spreizeinrichtung 4 dargestellt mit den Einzelspreizelementen 30 und 31, die in Spreizrichtung 34 spreizen. Der axiale Versatz 35 der Kontaktflächen 13 bzw. der Kontaktflächenbereiche 16 entspricht maximal der halben Länge der Kontaktfläche 13 bzw. des Kontaktflächenbereichs 16.

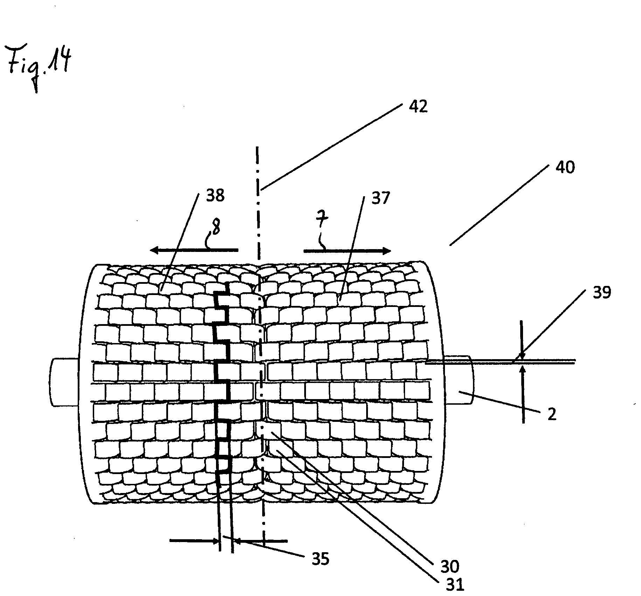

Da die ringförmigen Spreizeinrichtungen 4 zu einer alternativen Breitstreckwalze 40, wie in der Figur 14 dargestellt, genau auf Lücke montiert werden müssen, können die ringförmigen Spreizeinrichtungen 4 mit einer Verzahnung 41 an dem Trägerteil 32 zur genauen Montage und Lagefixierung ausgestattet sein. So kann auch der Bewegungsspalt 39, der zur Bewegungsfreiheit jedes Einzelspreizelementes 30 und 31 notwendig ist, exakt eingehalten werden.

Ein weiterer Vorteil dieser Lösung ist auch daran zu erkennen, dass in der Walzenmitte 42 (siehe Figur 14) die nach rechts und links spreizenden Spreizelementringe 37 und 38 so ineinandergreifen, dass ein durchgängig umlaufender Umfangspalt 29 (vgl. Figur 1) vermieden wird.

Anstelle der Verzahnung 41 (vgl. Figur 12) können auch Führungsnasen 56 nach der Figur 13 vorgesehen werden. Dazu müssen an eine entsprechend ausgebildeten Rotationskörper 3 entsprechende Führungsnuten (nicht gezeigt) eingelassen sein. Die Führungsnasen 56 sind innen an dem Trägerteil 32 angebracht. Der Vorteil besteht darin, dass bei der Montage immer eine genaue Ausrichtung erreicht wird. Da die Bestückung eines Rotationskörpers 3 zu einer Breitstreckwalze 1 bzw. 40 nur mit einer Ausführung von Spreizeinrichtungen 4 bzw. Spreizelementringen 37 und 38 erfolgen soll, muss bei der Gestaltung von entsprechenden Spreizelementeringen 55 darauf geachtet werden, dass die Anzahl der Führungsnasen 56 und die Teilung der Einzelspreizelemente 30 und 31 genau aufeinander abgestimmt sind. Deshalb besteht dieser Spreizelementering 55 aus 42 Einzelspreizelementen (21 von Typ 31 und 21 vom Typ 31) und sechs Führungsnasen 56. Die Führungsnasen 56 wirken sowohl als Montagehilfen als auch als Verdrehsicherung der Spreizelementringe 55.

Bei den hier beschriebenen Ausführungen geht es im Wesentlichen um Breitstreckwalzen 1 bzw. 40 für höhere Geschwindigkeiten. Hierunter sollen Geschwindigkeitsbereiche zwischen 300 m/min und 1000 m/min Warenbahngeschwindigkeiten zählen.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

### Liste der verwendeten Bezugszeichen

- 1: Breitstreckwalze
- 1A: Axialrichtung
- 1B: Walzenränder
- 2: Welle
- 3: Rotationskörper
- 4: Spreizeinrichtungen
- 4A: rechte Spreizeinrichtungen
- 4B: linke Spreizeinrichtungen
- 4C: Spreizelementeringe
- 5: Spreizhauptrichtung
- 6: Lager
- 7: Spreizrichtung rechts
- 8: Spreizrichtung links
- 9: Außendurchmesser
- 9A: Umhüllende bzw. Umfangsfläche
- 10: Spalt zwischen Einzelspreizelementen
- 11: Einzelspreizelemente
- 11A: freies Ende
- 11B: zweites Ende
- 11C: sichelförmiger Verformungskörper
- 12: ringförmiges Trägerteil bzw. Tragring
- 13: Kontaktflächen
- 14: Ringkerbe
- 14A: Übergangsbereich
- 15: Kippachse
- 15A: Vertikalebene
- 15B: erste Vertikalebenenseite
- 15C: zweite Vertikalebenenseite
- 16: Kontaktflächenbereich bzw. Kontaktteil
- 17: Einzelschwerpunkt des Kontaktflächenbereichs
- 18: Einzelschwerpunkt des Verbindungsbereichs
- 19: Verbindungsbereich bzw. Stegteil bzw. Verbindungssteg
- 19A: Biegebereich
- 20: Fliehkräfte, insbesondere wirkend auf den Kontaktflächenbereich
- 21: Ursprungslage
- 22: Ausgangslage
- 25: Auslenklage
- 26: fiktiver Drehpunkt
- 27: Fliehkräfte, insbesondere auf den Verbindungsbereich
- 28: Fliehkräftekomponente
- 29: Ringspalt
- 29A: Abstand
- 30: Einzelspreizelemente (erste Reihe)
- 31: Einzelspreizelemente (zweite Reihe)
- 32: breiteres ringförmiges Trägerteil bzw. Tragring
- 33: flächige Materialbahn bzw. Warenbahn
- 34: Spreizrichtung
- 35: axiale Versatz
- 36: Doppelreihen
- 37: weitere Spreizelementringe
- 38: weitere Spreizelementringe
- 39: Bewegungsspalt
- 40: alternative Breitstreckwalze
- 41: Verzahnung
- 42: Walzenmitte
- 43: Kraft
- 44: Darstellung Spitze des unbelasteten Einzelspreizelements
- 45: Darstellung Spitze des belasteten Einzelspreizelements
- 46: Spreizspalt
- 51: Mitte bzw. Mittellinie
- 53: Durchmesservergrößerung
- 53A: radiale Auslenkung
- 54: Durchmesserreduzierung
- 55: Spreizelementeringe
- 56: Führungsnasen
- 60: Rotationsachse
- 65: nach radial außen gerichtete Radialrichtung
- 66: Belastungslage
- 67: Kipprichtung
- 68: Kipplage
- 70: günstige Betriebslage
- 75: erster Verformungsbereich
- 76: weiterer Verformungsbereich
- 77: obere Radialhöhe des ersten Verformungsbereichs am Kontaktflächenbereich
- 78: untere Radialhöhe des weiteren Verformungsbereichs am Verbindungsbereich

## Patentansprüche

1. Spreizeinrichtung (4, 4A, 4B, 4C) zum Spreizen einer flächigen Materialbahn (33) mit einer Spreizhauptrichtung (5, 7, 8), mit einem elastisch verformbaren Trägerteil (12) zum Anordnen an einem Rotationskörper (3) und mit einer Vielzahl an elastisch verformbaren Einzelspreizelementen (11; 30, 31) zum Erzielen einer in Spreizhauptrichtung (5, 7, 8) gerichteten Spreizwirkung, bei welcher das jeweilige Einzelspreizelement (11; 30, 31) einerseits an seinem dem Trägerteil (12) abgewandten freien Ende (11A) einen Kontaktflächenbereich (16) mit einer Kontaktfläche (13) zum Wechselwirken mit der flächigen Materialbahn (33) aufweist und andererseits an seinem dem freien Ende (11A) abgewandten, zweiten Ende (11B) an dem Trägerteil (12) angeordnet ist, ***dadurch gekennzeichnet, dass*** die Spreizeinrichtung (4, 4A, 4B, 4C) derart eingerichtet ist, dass das jeweilige Einzelspreizelement (11; 30, 31) mittels Fliehkräfteeinwirkung (27) zumindest bereichsweise oder zur Gänze in Richtung des freien Endes um eine Kippachse (15) kippbar ist, wobei das jeweilige Einzelspreizelement (11) wenigstens zwei Verformungsbereiche (75, 76) mit unterschiedlichen Hauptverformungsrichtungen (65, 67) und/oder mit unterschiedlichen Verformungsvermögen aufweist, wobei die wenigstens zwei Verformungsbereiche (75, 76) auf unterschiedlichen Radialhöhen (77, 78) angeordnet sind.

2. Spreizeinrichtung (4, 4A, 4B, 4C) nach Anspruch *1, **dadurch gekennzeichnet, dass*** die Kontaktfläche (13) durch auf das jeweilige Einzelspreizelement (11) wirkende Fliehkräfte (27) nach radial weiter innen verlagerbar ist.

3. Spreizeinrichtung (4, 4A, 4B, 4C) nach Anspruch 1 oder 2, ***dadurch gekennzeichnet, dass*** das jeweilige Einzelspreizelement (11) einen Gesamtschwerpunkt aufweist, welcher außerhalb des Kontaktflächenbereichs (16) liegt.

4. Spreizeinrichtung (4, 4A, 4B, 4C) nach einem der Ansprüche 1 bis 3, ***dadurch gekennzeichnet, dass*** das jeweilige Einzelspreizelement (11) einen Verbindungsbereich (19) aufweist, welcher zwischen dem Kontaktflächenbereich (16) und dem Trägerteil (12) angeordnet ist, wobei insbesondere das jeweilige Einzelspreizelement (11) mittels des Verbindungsbereichs (19) in Axialrichtung (1A) der Spreizeinrichtung (4, 4A, 4B, 4C) beweglich an dem Trägerteil (12) angeordnet ist, während der Kontaktflächenbereich (16) in Radialrichtung (65) beweglich an dem Verbindungsbereich (19) angeordnet ist.

5. Spreizeinrichtung (4, 4A, 4B, 4C) nach Anspruch 4, ***dadurch gekennzeichnet, dass*** der Verbindungsbereich (19) einen Biegebereich (19A) umfasst, welcher eine Kippachse (15) des jeweiligen Einzelspreizelements (11) aufweist, um welche herum das jeweiligen Einzelspreizelement (11) gegenüber dem Trägerteil (12) kippbar ist.

6. Spreizeinrichtung (4, 4A, 4B, 4C) nach Anspruch 5, ***dadurch gekennzeichnet, dass*** die Kippachse (15) eine Vertikalebene (15A) aufspannt, auf deren der Kontaktfläche (13) zugewandten ersten Vertikalebenenseite (15B) der Kontaktflächenbereich (16) angeordnet ist und auf deren der Kontaktfläche (13) abgewandten, zweiten Vertikalebenenseite (15C) der Verbindungsbereich (19) angeordnet ist.

7. Spreizeinrichtung (4, 4A, 4B, 4C) nach einem der Ansprüche 1 bis 6, ***dadurch gekennzeichnet, dass*** das jeweilige Einzelspreizelement (11) wenigstens zwei Verformungsbereiche (75, 76) mit gegensätzlichen und sich zumindest teilweise gegenseitig aufhebenden Verlagerungseffekten und/oder Verformungseffekten insbesondere hinsichtlich der Kontaktfläche (13) aufweist.

8. Breitstreckwalze (1; 40) zum seitlichen Ausbreiten einer flächigen Materialbahn (33) in axiale Spreizrichtungen (5, 7, 8) mit einer Umfangsfläche (9A), mittels welcher die Breitstreckwalze (1) mit der flächigen Materialbahn (33) in Wirkkontakt bringbar ist, mit einer Rotationsachse (60), um welche die Breitstreckwalze (1) rotierbar ist, und mit Spreizeinrichtungen (4, 4A, 4B, 4C) umfassend eine Vielzahl an Einzelspreizelementen (11), welche die Umfangsfläche (9A) bilden, ***dadurch gekennzeichnet, dass*** die Breitstreckwalze (1) Spreizeinrichtungen (4, 4A, 4B, 4C) nach einem der vorhergehenden Ansprüche aufweist.

9. Spreizeinrichtung (4, 4A, 4B, 4C) oder Breitstreckwalze (1; 40) nach einem der Ansprüche 1 bis 8, ***dadurch gekennzeichnet, dass*** das Massevolumen des Verbindungsbereichs (19) größer ist als das Massevolumen des Kontaktflächenbereichs (16) und beide Teile (16, 19) gegenüber dem Drehpunkt (26) auf verschiedenen Seiten (15B, 15C) angeordnet sind und sich dadurch die Fliehkräfte (20, 27) in ihrer Wirkung zumindest teilweise aufheben.

10. Spreizeinrichtung (4, 4A, 4B, 4C) oder Breitstreckwalze (1; 40) nach einem der Ansprüche 1 bis 9, ***dadurch gekennzeichnet, dass*** die Einzelspreizelemente (11) einreihig oder doppelreihig auf dem Trägerteil (12) angebracht sind und so zu einem Spreizelementring (4C) ausgeführt sind.

11. Spreizeinrichtung (4, 4A, 4B, 4C) oder Breitstreckwalze (1; 40) nach einem der Ansprüche 1 bis 10, ***dadurch gekennzeichnet, dass*** jedes Einzelspreizelement (11; 30, 31) C-förmig gestaltet ist und die Form des C's so ausgeführt ist, dass der Verbindungsbereichs (19) und der Kontaktflächenbereich (16) ohne erkennbare Stufe als abgerundeter Bogen geformt sind und der Verbindungsbereich (19) in Richtung Trägerteil (12) tailliert ausgeführt ist.

12. Verfahren zum Spreizen einer flächigen Materialbahn (33) mit Spreizeinrichtungen (4, 4A, 4B, 4C) nach einem der vorhergehenden Ansprüche, insbesondere einer Breitstreckwalze (1; 40), bei welchem eine Vielzahl an elastisch verformbaren Einzelspreizelementen der Spreizeinrichtung (4, 4A, 4B, 4C) mit der flächigen Materialbahn in Wirkkontakt gebracht wird, und bei welchem die Spreizeinrichtung (4, 4A, 4B, 4C) während des Spreizens der flächigen Materialbahn um eine Rotationsachse rotiert, und bei welchem die Kontaktfläche des jeweiligen Einzelspreizelements durch Fliehkräfte nach radial außen ausgelenkt wird, ***dadurch gekennzeichnet, dass*** eine radiale Auslenkung der Kontaktfläche in radial nach außen gerichteter Radialrichtung durch auf das jeweilige Einzelspreizelement wirkenden Fliehkräfte reduziert wird, während das Einzelspreizelement durch die Fliehkräfte um eine Kippachse gekippt wird.

## Claims

1. A spreading device (4, 4A, 4B, 4C) for spreading a flat material web (33) with a main spreading direction (5, 7, 8), with an elastically deformable support part (12) for arranging on a rotational body (3) and with a number of elastically deformable individual spreading elements (11; 30, 31) to achieve a spreading effect directed in the main spreading direction (5, 7, 8), in which the respective individual spreading element (11; 30, 31) has a contact surface area (16) at its free end (11A) facing away from the carrier part (12) with a contact surface (13) to interact with the flat material web (33) on the one hand and is arranged on the carrier part (12) at its second end (11B) facing away from the free end (11A) on the other hand, ***charac-terized in that*** the spreading device (4, 4A, 4B, 4C) is set up such that the respective individual spreading element (11; 30, 31) can be tilted about a tilting axis (15) at least in part or entirely in the direction of the free end by means of centrifugal forces (27), wherein the respective individual spreading element (11) has at least two deformation areas (75, 76) with different main deformation directions (65, 67) and/or with different deformation capacities, wherein the at least two deformation areas (75, 76) are arranged at different radial heights (77, 78).

2. A spreading device (4, 4A, 4B, 4C) according to Claim *1, **characterized in that*** the contact surface (13) can be displaced radially further inward by centrifugal forces (27) acting on the respective individual spreading element (11).

3. A spreading device (4, 4A, 4B, 4C) according to Claim 1 or 2, ***characterized in that*** the respective individual spreading element (11) has an overall center of gravity that lies outside the contact surface area (16).

4. A spreading device (4, 4A, 4B, 4C) according to one of claims 1 to 3, ***characterized in that*** the respective individual spreading element (11) has a connecting area (19) that is arranged between the contact surface area (16) and the support part (12), whereby in particular the respective individual spreading element (11) is arranged on the support part (12) so as to be movable in the axial direction (1A) of the spreading device (4, 4A, 4B, 4C) by means of the connecting area (19), while the contact surface area (16) is arranged on the connecting area (19) so as to be movable in the radial direction (65).

5. A spreading device (4, 4A, 4B, 4C) according to Claim 4, ***characterized in that*** the connecting area (19) comprises a bending area (19A) that has a tilting axis (15) of the respective individual spreading element (11), around which the respective individual spreading element (11) can be tilted relative to the support part (12).

6. A spreading device (4, 4A, 4B, 4C) according to Claim 5, ***characterized in that*** the tilting axis (15) spans a vertical plane (15A), on whose first vertical plane side (15B) facing the contact surface (13) the contact surface area (16) is arranged and on whose second vertical plane side (15C) facing away from the contact surface (13) the connecting area (19) is arranged.

7. A spreading device (4, 4A, 4B, 4C) according to one of Claims 1 to 6, ***characterized in that*** the respective individual spreading element (11) has at least two deformation areas (75, 76) with opposing and at least partially mutually canceling displacement effects and/or deformation effects, in particular with regard to the contact surface (13).

8. An expander roller (1; 40) for laterally spreading a flat material web (33) in axial spreading directions (5, 7, 8) with a peripheral surface (9A) by means of which the expander roller (1) can be brought into operative contact with the flat material web (33), with a rotation axis (60) around which the expander roller (1) can rotate, and with spreading devices (4, 4A, 4B, 4C) comprising a plurality of individual spreading elements (11) which form the peripheral surface (9A), ***characterized in that*** the expander roller (1) has spreading devices (4, 4A, 4B, 4C) according to one of the preceding claims.

9. A spreading device (4, 4A, 4B, 4C) or expander roller (1; 40) according to one of Claims 1 to 8, ***characterized in that*** the mass volume of the connecting area (19) is greater than the mass volume of the contact surface area (16) and both parts (16, 19) are arranged on different sides (15B, 15C) relative to the pivot point (26) and the centrifugal forces (20, 27) thereby at least partially cancel out each other's effect.

10. A spreading device (4, 4A, 4B, 4C) or expander roller (1; 40) according to one of Claims 1 to 9, ***characterized in that*** the individual spreading elements (11) are mounted in a single row or double row on the support part (12) and are thus designed to form a ring of spreading elements (4C).

11. A spreading device (4, 4A, 4B, 4C) or expander roller (1; 40) according to one of Claims 1 to 10, ***characterized in that*** each individual spreading element (11; 30, 31) is C-shaped and the shape of the C is designed such that the connecting area (19) and the contact surface area (16) are shaped as a rounded arc without a recognizable step and the connecting area (19) is tapered in the direction of the support part (12).

12. Method for spreading a flat material web (33) with spreading devices (4, 4A, 4B, 4C) according to one of the preceding claims, in particular an expander roller (1; 40), in which a plurality of elastically deformable individual spreading elements of the spreading device (4, 4A, 4B, 4C) are brought into operative contact with the flat material web, and in which the spreading device (4, 4A, 4B, 4C) rotates around a rotation axis during spreading of the flat material web, and in which the contact surface of the respective individual spreading element is deflected radially outward by centrifugal forces, ***characterized in that*** a radial deflection of the contact surface in a radially outward direction is reduced by centrifugal forces acting on the respective individual spreading element, while the individual spreading element is tilted about a tilting axis by the centrifugal forces.

## Revendications

1. Dispositif d'écartement (4, 4A, 4B, 4C) destiné à écarter une bande de matériau plane (33) présentant une direction principale d'écartement (5, 7, 8), comportant un élément de support déformable par élasticité (12) à agencer au niveau d'un corps de rotation (3) et comportant une pluralité éléments d'écartement individuels déformables par élasticité (11; 30, 31) permettant d'atteindre une action d'écartement orientée dans la direction principale d'écartement (5, 7, 8), dans lequel chaque élément d'écartement individuel (11; 30, 31) présente, d'une part, au niveau de son extrémité libre (11A) éloignée de l'élément de support (12), une zone de surface de contact (16) présentant une surface de contact (13) destinée à interagir avec la bande de matériau plane (33), et est disposé d'autre part, au niveau de sa seconde extrémité (11B) opposée à son extrémité libre (11A), au niveau de l'élément de support (12), ***caractérisé en ce que*** le dispositif d'écartement (4, 4A, 4B, 4C) est disposé de façon telle que chaque élément d'écartement individuel (11; 30, 31), par l'action de la force centrifuge (27), peut basculer autour d'un axe d'inclinaison (15), au moins par segments ou totalement, dans la direction de l'extrémité libre, chaque élément d'écartement individuel (11) présentant au moins deux zones de déformation (75, 76) présentant des directions principales de déformation différentes (65, 67) et/ou différentes capacités de déformation, les zones de déformation (75, 76), au moins au nombre de deux, étant disposées à des hauteurs radiales différentes (77, 78).

2. Dispositif d'écartement (4, 4A, 4B, 4C) selon la revendication *1, **caractérisé en ce que*** la surface de contact (13) peut être déplacée radialement plus vers l'intérieur par des forces centrifuges (27) agissant sur chaque élément d'écartement individuel (11).

3. Dispositif d'écartement (4, 4A, 4B, 4C) selon la revendication 1 ou 2, ***caractérisé en ce que*** chaque élément d'écartement individuel (11) présente un barycentre total qui est situé en-dehors de la zone de surface de contact (16).

4. Dispositif d'écartement (4, 4A, 4B, 4C) selon l'une des revendications 1 à 3, ***caractérisé en ce que*** chaque élément d'écartement individuel (11) présente une zone de liaison (19) qui est disposée entre la zone de surface de contact (16) et l'élément de support (12), chaque élément d'écartement individuel (11) étant notamment disposé au niveau de l'élément de support (12) de façon mobile dans la direction axiale (1A) du dispositif d'écartement (4, 4A, 4B, 4C), au moyen de la zone de liaison (19), tandis que la zone de surface de contact (16) est agencée au niveau de la zone de liaison (19) de façon mobile dans la direction radiale (65).

5. Dispositif d'écartement (4, 4A, 4B, 4C) selon la revendication 4, ***caractérisé en ce que*** la zone de liaison (19) comporte une zone de flexion (19A) qui présente un axe d'inclinaison (15) de chaque élément d'écartement individuel (11), autour duquel chaque élément d'écartement individuel (11) peut s'incliner par rapport à l'élément de support (12).

6. Dispositif d'écartement (4, 4A, 4B, 4C) selon la revendication 5, ***caractérisé en ce que*** l'axe d'inclinaison (15) définit un plan vertical (15A) sur le premier côté de plan vertical (15B), orienté vers la surface de contact (13), duquel est disposée la zone de surface de contact (16), et sur le second côté de plan vertical (15C), éloigné de la surface de contact (13), duquel est disposée la zone de liaison (19).

7. Dispositif d'écartement (4, 4A, 4B, 4C) selon l'une des revendications 1 à 6, ***carac-térisé en ce que*** chaque élément d'écartement individuel (11) présente au moins deux zones de déformation (75, 76) ayant des effets de décalage et/ou des effets de déformation opposés et qui s'annulent au moins partiellement, en particulier eu égard à la surface de contact (13).

8. Rouleau étendeur (1; 40) permettant l'extension latérale d'une bande de matériau plane (33) dans des directions d'extension axiales (5, 7, 8) et présentant une surface périphérique (9A), au moyen de laquelle le rouleau étendeur (1) peut être amené en contact par action avec la bande de matériau plane (33), comportant un axe de rotation (60) autour duquel peut pivoter le rouleau étendeur (1), et comportant des dispositifs d'écartement (4, 4A, 4B, 4C) comportant une pluralité d'éléments d'écartement individuels (11), qui forment la surface périphérique (9A), ***caractérisé en ce que*** le rouleau étendeur (1) présente des dispositifs d'écartement (4, 4A, 4B, 4C) selon l'une des revendications précédentes.

9. Dispositif d'écartement (4, 4A, 4B, 4C) ou rouleau étendeur (1; 40) selon l'une des revendications 1 à 8, ***caractérisé en ce que*** la masse volumique de la zone de liaison (19) est supérieure à la masse volumique de la zone de surface de contact (16), et **en ce que** les deux parties (16, 19) sont disposées par rapport au point de rotation (26) sur différents côtés (15B, 15C) et compensent de ce fait dans leur action, au moins partiellement, la force centrifuge (20, 27).

10. Dispositif d'écartement (4, 4A, 4B, 4C) ou rouleau étendeur (1; 40) selon l'une des revendications 1 à 9, ***caractérisé en ce que*** les éléments d'écartement individuels (11) peuvent être appliqués en une rangée ou en deux rangées sur l'élément de support (12) et sont ainsi exécutés en un anneau d'éléments d'écartement (4C).

11. Dispositif d'écartement (4, 4A, 4B, 4C) ou rouleau étendeur (1; 40) selon l'une des revendications 1 à 10, ***caractérisé en ce que*** chaque élément d'écartement individuel (11; 30, 31) est conçu en forme de C, et **en ce que** la forme en C est exécutée de façon telle que la zone de liaison (19) et la zone de surface de contact (16) sont formées comme un arc arrondi sans étage identifiable et que la zone de liaison (19) est exécutée en étant cintrée dans la direction de l'élément de support (12).

12. Procédé destiné à écarter une bande de matériau plane (33) avec des dispositifs d'écartement (4, 4A, 4B, 4C) selon l'une des revendications précédentes, en particulier un rouleau étendeur (1; 40), dans lequel une pluralité d'éléments d'écartement déformables par élasticité du dispositif d'écartement (4, 4A, 4B, 4C) sont amenés en contact d'interaction avec la bande de matériau plane, et dans lequel le dispositif d'écartement (4, 4A, 4B, 4C), pendant l'écartement de la bande de matériau plane, tourne autour d'un axe de rotation, et dans lequel la surface de contact de chaque élément d'écartement individuel subit une excursion radialement vers l'extérieur par la force centrifuge, ***caractérisé en ce qu'**une* excursion radiale de la surface de contact dans la direction orientée radialement vers l'extérieur est réduite par les forces centrifuges agissant sur chaque élément d'écartement individuel pendant que l'élément d'écartement individuel est basculé autour d'un axe d'inclinaison par la force centrifuge.
